(19) Europäisches Patentamt
European Patent Office
Office européen des brevets

(11) EP 4 310 115 A1

(12) EUROPEAN PATENT APPLICATION

(43) Date of publication:
24.01.2024 Bulletin 2024/04

(21) Application number: 22306078.1

(22) Date of filing: 20.07.2022

(51) International Patent Classification (IPC):
*C08F 220/14* (2006.01) *C08F 220/18* (2006.01)
*C08F 265/06* (2006.01) *C09D 4/06* (2006.01)

(52) Cooperative Patent Classification (CPC):
(C-Sets available)
**C08F 220/14; C08F 220/1804; C08F 220/1809; C08F 220/1811; C08F 265/06; C09D 4/06** (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ARKEMA FRANCE**
**92700 Colombes (FR)**

(72) Inventors:
- **SCHOLTE, Jon**
  **KING OF PRUSSIA, 19406-1308 (US)**
- **MACNEILL, Christopher**
  **KING OF PRUSSIA, 19406-1308 (US)**
- **KONTOS, Renee**
  **KING OF PRUSSIA, 19406-1308 (US)**
- **FRANCESCHINI, Linda**
  **KING OF PRUSSIA, 19406-1308 (US)**
- **CICERON, Philippe**
  **60550 Verneuil en Halatte (FR)**
- **DEMOULIN, Kevin**
  **60550 Verneuil en Halatte (FR)**
- **MELEC, Pierre**
  **60550 Verneuil en Halatte (FR)**
- **VERGE, Christophe**
  **60550 Verneuil en Halatte (FR)**

(74) Representative: **Rogeau, Antoine**
**Arkema France**
**420, rue d'Estienne d'Orves**
**92705 Colombes Cedex (FR)**

# (54) OLIGOMERS COMPRISING POLYMERIZED HIGH-TG MONOMERS

(57) The present invention relates to an oligomer comprising polymerized high-$T_g$ monomer units, polymerized low-$T_g$ monomer units, polymerized chromophore monomer units, and optionally at least one polymerized additional monomer unit. The invention also relates to an ultraviolet curable composition comprising the oligomer, and a coating formed from curing the ultraviolet curable composition.

EP 4 310 115 A1

(52) Cooperative Patent Classification (CPC): (Cont.)

C-Sets
**C08F 220/14, C08F 220/1804, C08F 220/301;**
**C08F 220/14, C08F 220/1811, C08F 220/1804, C08F 220/301;**
**C08F 220/1804, C08F 220/14, C08F 220/1811, C08F 220/301;**
**C08F 220/1804, C08F 220/14, C08F 220/301;**
**C08F 220/1804, C08F 220/1804, C08F 220/301;**
**C08F 220/1804, C08F 220/1811, C08F 220/14, C08F 220/301;**
**C08F 220/1804, C08F 220/1811, C08F 220/301;**
**C08F 220/1809, C08F 220/1804, C08F 220/301;**
**C08F 220/1811, C08F 220/14, C08F 220/1804, C08F 220/301;**
**C08F 220/1811, C08F 220/1804, C08F 220/301;**
**C08F 265/06, C08F 222/104;**
**C09D 4/06, C08F 265/06**

## Description

TECHNICAL FIELD

The present invention relates to an oligomer. The oligomer comprises polymerized high $T_g$ monomer units, polymerized low $T_g$ monomer units, polymerized chromophore monomer units, and optionally at least one polymerized additional monomer unit. The invention also relates to use of the curable composition as a coating and methods of coating a substrate.

BACKGROUND

Oligomers having acrylic polymerized monomers and chromophores can generally be crosslinked via irradiation with ultraviolet (UV light), but have certain drawbacks during processing. For example, oligomers having a $T_g$ of equal to or greater than 0 °C can be difficult to sufficiently crosslink, which may weaken coatings and adhesives derived therefrom. Such difficulty limits their application due to performance requirements.

Oligomers having a $T_g$ of equal to or greater than 0 °C can be processed to form high-$T_g$ coatings and adhesives that offer advantages over low-$T_g$ coatings and adhesives formed from oligomers having a $T_g$ of less than 0 °C, such as improved hardness. However, it may be challenging to develop such oligomers that realize desired characteristics, such as sufficient crosslinking upon curing. Thus, there is a need for oligomers having a $T_g$ of equal to or greater than 0 °C while maintaining high crosslinking upon curing.

Embodiments of the oligomers disclosed herein overcome drawbacks associated with known oligomers having a $T_g$ of equal to or greater than 0 °C.

SUMMARY

A first aspect disclosed herein is a an oligomer comprising, based on the total weight of the oligomer: from 1% to 95% by weight polymerized high-$T_g$ monomer units, from 0.1% to 98.9% by weight polymerized low-$T_g$ monomer units, from 0.1% to 40% by weight polymerized chromophore monomer units, and from 0 to 20% by weight of at least one polymerized additional monomer unit; wherein: the high-$T_g$ monomer units are (meth)acrylate monomers having a Fox Equation average glass transition temperature ($T_g$) equal to or greater than 25 °C; the low-$T_g$ monomer units are monovalent (meth)acrylate monomers having a Fox Equation average $T_g$ less than 25 °C; the Fox Equation average $T_g$ of the high-$T_g$ monomer units is at least 20 °C greater than the Fox Equation average $T_g$ of the low-$T_g$ monomer units; the chromophore monomer units are (meth)acrylate monomers having a pendent Norrish Type II chromophore; the oligomer has a weight average molecular weight of at least 10,000 grams per mole (g/mol); and the oligomer has a $T_g$ equal to or greater than 0 °C.

Another aspect disclosed herein is an ultraviolet curable composition comprising the oligomer.

Another aspect disclosed herein is a coating formed by curing the ultraviolet curable composition.

This summary is provided to introduce a selection of concepts that are further described in the detailed description. This summary is not intended to identify key or essential features of the claimed subject matter, nor is it intended to be used as an aid in limiting the scope of the claimed subject matter.

Additional features and advantages of the described embodiments will be set forth in the detailed description that follows. The additional features and advantages of the described embodiments will be, in part, readily apparent to those skilled in the art from that description or recognized by practicing the described embodiments, including the detailed description that follows as well as the drawings and the claims.

DESCRIPTION OF DRAWINGS

FIG. 1 is a graph of gel content of cured comparative examples and examples according to one or more embodiments described herein;

FIG. 2 is a graph of gel content of cured comparative examples and examples according to one or more embodiments described herein;

FIG. 3 is a graph of gel content of cured comparative examples and examples according to one or more embodiments described herein;

FIG. 4 is a graph of gel content of cured comparative examples and examples according to one or more embodiments described herein;

FIG. 5 is a graph of gel content of cured comparative examples and examples according to one or more embodiments described herein;

FIG. 6 is a graph of cure speed of comparative examples and examples according to one or more embodiments described herein;

FIG. 7 is a graph of cure speed of comparative examples and examples, according to one or more embodiments described herein.

Reference will now be made in greater detail to various embodiments, some embodiments of which are illustrated in the accompanying drawings.

DETAILED DESCRIPTION

Definitions

As used herein, the term "comprises a" can mean "comprises one or more".

Unless otherwise mentioned, the weight percentages in a compound or a composition are expressed relative to the weight of the compound, respectively of the composition.

The term "substitution" herein means that at least one hydrogen atom (-H) bonded to a carbon atom or heteroatom of a corresponding unsubstituted compound or functional group is replaced by a substituent (e.g. $R^S$). The term "persubstitution" means that every hydrogen atom (H) bonded to a carbon atom or heteroatom of a corresponding unsubstituted compound or functional group is replaced by a substituent (e.g., $R^S$). The term "polysubstitution" means that at least two, but fewer than all, hydrogen atoms bonded to carbon atoms or heteroatoms of a corresponding unsubstituted compound or functional group are replaced by a substituent. Unless otherwise defined or limited in a specific context, a substituent group generally, or a substituent group referred to as $R^S$, may be any chemical moiety, typically, but not necessarily limited to, a chemical moiety having from 1 to 50, or from 1 to 40, or from 1 to 30, or from 1 to 20, or from 1 to 10 total atoms. Examples of substituent groups $R^S$ include, but are not limited to, a hydrocarbyl, a heterohydrocarbyl, an aryl, a heteroaryl, an alkyl, a cycloalkyl, a heteroatom, a carbonyl, a hydroxy, an ester, an ether, an amine, an amide, or a halide according to their respective definitions herein or their commonly understood meaning, any of which substituents themselves may be substituted or unsubstituted. In some embodiments, substituents $R^S$ may be chosen from a $(C_1\text{-}C_{30})$hydrocarbyl, a $(C_1\text{-}C_{30})$heterohydrocarbyl, a $(C_6\text{-}C_{30})$aryl, or a $(C_6\text{-}C_{30})$heteroaryl.

The term "hydrocarbyl" means a monovalent hydrocarbon, in which each hydrocarbon is aromatic or non-aromatic, saturated or unsaturated, straight chain or branched chain, cyclic (having three carbons or more, and including mono- and poly-cyclic, fused and non-fused polycyclic, and bicyclic) or acyclic, and substituted by one or more $R^S$, or unsubstituted. In this disclosure, hydrocarbyl may be an unsubstituted or substituted alkyl, an unsubstituted or substituted cycloalkyl, or an unsubstituted or substituted aryl.

The term "aryl" means an optionally substituted polyunsaturated aromatic group. The aryl may contain a single ring (i.e. phenyl) or more than one ring wherein at least one ring is aromatic. When the aryl comprises more than one more ring, the rings may be fused, linked via a covalent bond (for example biphenyl). The aromatic ring may optionally comprise one to two additional fused rings (i.e. cycloalkyl, heterocycloalkyl or heteroaryl). Examples include phenyl, naphthyl, biphenyl, phenanthrenyl and naphthacenyl.

The term "alkyl" means a monovalent saturated acyclic hydrocarbon group of formula $-C_nH_{2n+1}$ wherein n is 1 to 20. An alkyl may be linear or branched. Examples of alkyl groups include methyl, ethyl, propyl, isopropyl, butyl, isobutyl, tert-butyl, pentyl, hexyl, 2-methylbutyl, 2,2-dimethylpropyl, n-hexyl, 2-methylpentyl, 2,2-dimethylbutyl, n-heptyl, 2-ethyl hexyl, and the like.

The term "cycloalkyl" means a monovalent saturated alicyclic hydrocarbon group comprising a cycle. Examples of cycloalkyl groups include cyclopentyl, cyclohexyl, and isobornyl, any of which may be substituted or unsubstituted.

The term "heterocycloalkyl" means a cycloalkyl having at least one ring atom that is a heteroatom selected from O, N, or S.

The term "halogen" means an atom selected from Cl, Br, F and I.

The term "alkoxy" means a group of formula -O-alkyl, wherein the alkyl is as defined above.

The term "aryloxy" means a group of formula -O-aryl, wherein the aryl is as defined above.

The term "thioalkyl" means a group of formula -S-alkyl, wherein the alkyl is as defined above.

The term "thioaryl" means a group of formula -S-aryl, wherein the aryl is as defined above.

The term "alkenyl" means a monovalent acyclic hydrocarbon group comprising at least one C=C double bond. An alkenyl may be linear or branched.

The term "alkynyl" means a monovalent acyclic hydrocarbon group comprising at least one C=C triple bond. An alkynyl may be linear or branched.

The term "aralkyl" means an aryl substituted by an alkyl group. An example of an aralkyl group is tolyl.

The term "alkaryl" means an alkyl substituted by an aryl group. An example of an alkaryl group is benzyl ($-CH_2$-Phenyl).

The term "heteroaryl" means an aryl having at least one ring atom that is a heteroatom.

The term "alkylamino" means an alkyl substituted by at least one amino group.

The term "alkylthiol" means an alkyl substituted by at least one thiol group

The term "hydroxyalkyl" means an alkyl substituted by at least one hydroxy group.

The term "haloalkyl" means an alkyl substituted by at least one halogen.

The term "alkylene" or "alkanediyl" means a linker derived from an alkane of formula $C_mH_{2m+2}$ by removing one hydrogen atom at each point of attachment of the linker. An alkylene may be divalent, trivalent, tetravalent or have even higher valencies.

The term "alkoxylated" means a compound, group or linker containing one or more oxyalkylene moieties, in particular one or more oxyalkylene selected from oxyethylene ($-O-CH_2-CH_2-$), oxypropylene ($-O-CH_2-CH(CH_3)-$ or $-O-CH(CH_3)-CH_2-$), oxybutylene ($-O-CH_2-CH_2-CH_2-CH_2-$) and mixtures thereof. For example, an alkoxylated compound, group or linker may contain from 1 to 30 oxyalkylene moieties.

The term "(meth)acrylate" means acrylate or methacrylate. The term "acrylate" means an acryloyloxy group ($-O-C(=O)-CH=CH_2$). The term "methacrylate" means a methacryloyloxy group ($-O-C(=O)-C(CH_3)=CH_2$).

As used herein, the "monomers" have a number average molecular weight of less than 1,000 g/mol, preferably 100 to 950 g/mol.

As used herein, the "oligomers" have a number average molecular weight from equal to or more than 1,000 g /mol, preferably 1,050 to 60,000 g/mol, more preferably 10,000 to 50,000 g/mol.

The term "glass transition temperature" or "$T_g$" refers to the temperature at which a material changes from a glassy state to a rubbery state. In this context, the term "glassy" means that the material is hard and brittle while the term "rubbery" means that the material is elastic and flexible. For polymeric materials, the $T_g$ is the critical temperature that separates their glassy and rubbery behaviors. If a polymeric material is at a temperature below its $T_g$, large-scale molecular motion is severely restricted because the material is essentially frozen. On the other hand, if the polymeric material is at a temperature above its $T_g$, molecular motion on the scale of its repeat unit takes place, allowing it to be soft or rubbery.

All references herein to a $T_g$ of a monomer refer to the $T_g$ of a homopolymer formed from that monomer. $T_g$ values of common monomers are well-known from literature. If not reported in the literature, glass transition temperature values may be determined in accordance with ASTM E1356-08, "Standard Test Method for Assignment of the Glass Transition Temperatures by Differential Scanning Calorimetry" as the inflection temperature ($T_i$). The glass transition temperatures of the oligomers described herein and mentioned in the examples below are calculated using the Fox Equation based on the mass fractions and $T_g$ values of each individual monomer of the oligomer or polymeric material that includes more than one discrete type of monomer.

The terms "mass fraction" and "weight fraction" are used herein interchangeably and are to be regarded as equivalent to each other with respect to embodiments or examples herein.

The "Fox Equation" refers to equation (1):

$$1 / T_{g,mix} \approx \sum_i \omega_i / T_{g,i} \qquad \text{equation (1)}$$

where $T_{g,mix}$ is the glass transition temperature of a mixture of *i* chemically discrete components, such as two or more discrete monomers of an oligomer or polymer, $T_{g,i}$ is the glass transition temperature of the *i*-th component, and $\omega_i$ is the mass fraction of the *i*-th component, based on the total mass of the oligomer or polymer. Hereinafter, the value $T_{g,mix}$ with respect to multiple discrete monomers in an oligomer or polymer is referred to as the "Fox Equation average $T_g$" of the multiple discrete monomers.

For two components of each type of monomer, A and B, the Fox Equation reduces to equation (2):

$$1 / T_{g,mix} \approx \omega_A / T_{g,A} + \omega_B / T_{g,B} \qquad \text{equation (2)}$$

The term "high-$T_g$ monomer unit" refers to a monomer that, when homopolymerized, produces a homopolymer having a $T_g$ of equal to or greater than 25 °C. In embodiments of the oligomer, for which only one kind of high-$T_g$ monomer

unit is present in the oligomer, the $T_g$ of the high-$T_g$ monomer units is the $T_g$ of a homopolymer of the one kind of high-$T_g$ monomer unit. In embodiments of the oligomer, for which two or more types of distinct high-$T_g$ monomer units are present in the oligomer, the $T_g$ of the high-$T_g$ monomer units of the oligomer collectively refers to the Fox Equation average $T_g$ of the combination of the high-$T_g$ monomer units, in which for equation (1) the individual mass fractions $\omega_i$ are mass fractions of each individual high-$T_g$ monomer unit in the oligomer, based on the total mass of all the high-$T_g$ monomer units present in the oligomer (that is, the monomer units having a $T_g$ of equal to or greater than 25 °C), not on the total mass of the oligomer as a whole.

The term "Fox Equation average" may be used herein even with respect to a single monomer that is not part of a mixture of two or more monomers. It should be readily understood that a Fox Equation average $T_g$ with respect to a single monomer is equivalent to the $T_g$ of the single monomer itself, as defined herein, as the term mass fraction term $\omega$ in such a situation would equal one.

The term "low-$T_g$ monomer unit" refers to a monomer that, when homopolymerized, produces a homopolymer having a $T_g$ of less than 25 °C. In embodiments of the oligomer, for which only one kind of low-$T_g$ monomer unit is present in the oligomer, the $T_g$ of the low-$T_g$ monomer units is the $T_g$ of a homopolymer of the one kind of low-$T_g$ monomer unit. In embodiments of the oligomer, for which two or more types of distinct low-$T_g$ monomer units are present in the oligomer, the $T_g$ of the low-$T_g$ monomer units of the oligomer collectively refers to the Fox Equation average $T_g$ of the combination of the low-$T_g$ monomer units, in which for equation (1) the individual mass fractions $\omega_i$ are mass fractions of each individual low-$T_g$ monomer unit in the oligomer, based on the total mass of all the low-$T_g$ monomer units present in the oligomer (that is, the monomer units having a $T_g$ of less than 25 °C), not on the total mass of the oligomer as a whole.

The term "photoinitiator", may be considered any type of substance that, upon exposure to radiation (e.g., actinic radiation), forms species that initiate the reaction and curing of polymerizing organic substances present in a curable composition.

The term "chromophore" refers herein to a Norrish Type II light absorbing molecule that enters an excited state upon absorbing light. From this excited state, the molecule can interact or react with other molecules to produce reactive radical species.

When used to describe certain carbon atom-containing chemical groups, an expression having the form "$A^1$-$A^4$" refers to each $A^x$ group within the range from $A^1$ to $A^4$, inclusive of 1 and 4. For example, an expression having the form "$A^1A^4$" refers to $A^1$, $A^{2,}$ $A^3$, and $A^4$. An expression having the form "$Z^1$-$Z^4$" refers to each $Z^x$ group within the range from $Z^1$ to $Z^4$, inclusive of 1 and 4. For example, an expression having the form "$Z^1$-$Z^4$" refers to $Z^1$, $Z^2$,, $Z^3$, and $Z^4$.

The term "independently selected" is used herein to indicate that the substituent groups, such as, $Z^1$, $Z^{2,}$ $Z^3$, and $Z^4$, can be identical or different (e.g., $Z^1$, $Z^{2,}$ $Z^3$, and $Z^4$ may all be $-CH_3$ or $Z^1$ and $Z^2$ may be $-CH_3$ and $Z^3$ and $Z^4$ may be -H, etc.) A chemical name associated with a substituent group is intended to convey the chemical structure that is recognized in the art as corresponding to that of the chemical name. Thus, chemical names are intended to supplement and illustrate, not preclude, the structural definitions known to those of skill in the art.

When used to describe certain carbon atom-containing chemical groups, a parenthetical expression having the form "($C_x$-$C_y$)" means that the unsubstituted form of the chemical group has from x carbon atoms to y carbon atoms, inclusive of x and y. For example, a ($C_1$-$C_{20}$)hydrocarbyl is a hydrocarbyl group having from 1 to 20 carbon atoms in its unsubstituted form. In some embodiments and general structures, certain chemical groups may be substituted by one or more substituents such as $R^S$. An $R^S$ substituted version of a chemical group defined using the "($C_x$-$C_y$)" parenthetical may contain more than y carbon atoms depending on the identity of any groups $R^S$. For example, a "($C_1$-$C_{20}$)alkyl substituted with exactly one group $R^S$, where $R^S$ is phenyl ($-C_6H_5$)" may contain from 7 to 27 carbon atoms. Thus, in general when a chemical group defined using the "($C_x$-$C_y$)" parenthetical is substituted by one or more carbon atom-containing substituents $R^S$, the minimum and maximum total number of carbon atoms of the chemical group is determined by adding to both x and y the combined sum of the number of carbon atoms from all of the carbon atom-containing substituents $R^S$.

The term "-H" means a hydrogen atom that is covalently bonded to an atom other than hydrogen. "Hydrogen" and "-H" are interchangeable, and, unless clearly specified, have identical meanings.

The term "($C_1$-$C_{30}$)hydrocarbyl" means a monovalent hydrocarbon of from 1 to 30 carbon atoms, in which each monovalent hydrocarbon is aromatic or non-aromatic, saturated or unsaturated, straight chain or branched chain, cyclic (having three carbons or more, and including mono- and poly-cyclic, fused and non-fused polycyclic, and bicyclic) or acyclic, and substituted by one or more $R^S$, or unsubstituted. In this disclosure, a ($C_1$-$C_{30}$)hydrocarbyl may be an unsubstituted or substituted ($C_1$-$C_{30}$)alkyl, ($C_3$-$C_{30}$)cycloalkyl, or ($C_6$-$C_{30}$)aryl.

The term "($C_2$-$C_{30}$)alkyl" mean a saturated straight or branched monovalent hydrocarbon of from 2 to 30 carbon atoms that is unsubstituted or substituted by one or more $R^S$. Examples of unsubstituted ($C_2$-$C_{30}$)alkyl are unsubstituted ($C_2$-$C_{20}$)alkyl; unsubstituted ($C_6$-$C_{25}$)alkyl; unsubstituted ($C_4$-$C_8$)alkyl; 1-butyl; 2-butyl; 2-methylpropyl; 1,1-dimethylethyl; 1-pentyl; 1-hexyl; 1-heptyl; 1-nonyl; and 1-decyl. Examples of substituted ($C_2$-$C_{30}$)alkyl are substituted ($C_2$-$C_{20}$)alkyl, substituted ($C_2$-$C_{10}$)alkyl.

The term "($C_6$-$C_{40}$)aryl" means an unsubstituted or substituted (by one or more $R^S$) monocyclic, bicyclic, or

tricyclic aromatic monovalent hydrocarbon of from 6 to 40 carbon atoms, of which at least from 6 to 14 of the carbon atoms are aromatic ring carbon atoms. A monocyclic aromatic monovalent hydrocarbon includes one aromatic ring; a bicyclic aromatic monovalent hydrocarbon has two rings; and a tricyclic aromatic monovalent hydrocarbon has three rings. When the bicyclic or tricyclic aromatic monovalent hydrocarbon is present, at least one of the rings of the monovalent hydrocarbon is aromatic. The other ring or rings of the aromatic monovalent hydrocarbon may be independently fused or non-fused and aromatic or non-aromatic. Examples of unsubstituted ($C_6$-$C_{40}$)aryl include: unsubstituted ($C_6$-$C_{20}$)aryl, unsubstituted ($C_6$-$C_{18}$)aryl; 2-($C_1$-$C_5$)alkyl-phenyl; phenyl; fluorenyl; tetrahydrofluorenyl; idacenyl; hexahydracenyl; hexahydroindacenyl; indenyl; dihydroindenyl; naphthyl; tetrahydronaphthyl; and phenanthrene. Examples of substituted ($C_6$-$C_{40}$)aryl include: substituted ($C_1$-$C_{20}$)aryl; and substituted ($C_6$-$C_{18}$)aryl. The term "($C_6$-$C_{12}$)cycloalkyl" means a saturated cyclic monovalent hydrocarbon of from 6 to 12 carbon atoms that is unsubstituted or substituted. Other cycloalkyl groups (e.g., ($C_x$-$C_y$)cycloalkyl) are defined in an analogous manner as having from x to y carbon atoms and being either unsubstituted or substituted by one or more $R^S$. Examples of unsubstituted ($C_6$-$C_{12}$)cycloalkyl are unsubstituted ($C_6$-$C_8$)cycloalkyl, unsubstituted ($C_6$-$C_{10}$)cycloalkyl, cyclopropyl, cyclobutyl, cyclopentyl, cyclohexyl, cycioheptyl, cyclooctyl, cyclononyl, and cyclodecyl. Examples of substituted ($C_6$-$C_{12}$)cycloalkyl are substituted ($C_6$-$C_8$)cycloalkyl, substituted ($C_6$-$C_{10}$)cycloalkyl, isobornyl, and 3,3,5-trimethylcyclohexyl.

The term "heteroatom," refers to an atom other than hydrogen or carbon. Examples of heteroatoms include O, S, N, Si. The term "heterohydrocarbon" refers to a molecule or molecular framework in which one or more carbon atoms of a hydrocarbon are replaced with a heteroatom. The term "($C_1$-$C_{30}$)heterohydrocarbyl" means a monovalent heterohydrocarbon of from 1 to 30 carbon atoms, and the term "($C_1$-$C_{30}$)heterohydrocarbylene" means a divalent heterohydrocarbon of from 1 to 30 carbon atoms. The heterohydrocarbon of the ($C_1$-$C_{30}$)heterohydrocarbyl or the ($C_1$-$C_{30}$)heterohydrocarbylene has one or more heteroatoms. The valency or connection point of the heterohydrocarbyl may be on a carbon atom or a heteroatom. The two valencies of the heterohydrocarbylene may be on a single carbon atom or on a single heteroatom. Additionally, one of the two valencies or connection points of the diradical may be on a carbon atom and the other valency may be on a different carbon atom; one of the two valencies or connection points may be on a carbon atom and the other on a heteroatom; or one of the two valencies or connection points may be on a heteroatom and the other valency or connection point on a different heteroatom. Each ($C_1$-$C_{30}$)heterohydrocarbyl and ($C_1$-$C_{30}$)heterohydrocarbylene may be unsubstituted or substituted, aromatic or non-aromatic, saturated or unsaturated, straight chain or branched chain, cyclic (including mono- and poly-cyclic, fused and non-fused polycyclic), or acyclic.

The term "saturated" means lacking carbon-carbon double bonds, carbon-carbon triple bonds, and (in heteroatom-containing groups) carbon-nitrogen, carbon-phosphorous, and carbon-silicon double bonds. Where a saturated chemical group is substituted by one or more substituents $R^S$, one or more double and/or triple bonds optionally may or may not be present in substituents $R^S$. The term "unsaturated" means containing one or more carbon-carbon double bonds, carbon-carbon triple bonds, or (in heteroatom-containing groups) one or more carbon-nitrogen, carbon-phosphorous, or carbon-silicon double bonds, not including double bonds that may be present in substituents $R^S$, if any, or in (hetero) aromatic rings, if any.

The term "linker" means a multivalent group. A linker may connect at least two moieties of a compound together, in particular 2 to 16 moieties of a compound together. For example, a linker that connects two moieties of a compound together is referred to as a divalent linker and a linker that connects three moieties of a compound together is referred to as a trivalent linker.

Oligomer

In embodiments, the oligomer comprises from 1% to 95% by weight polymerized high-$T_g$ monomer units, from 0.1% to 98.9% by weight polymerized low-$T_g$ monomer units, from 0.1% to 40% by weight polymerized chromophore monomer units, and from 0 to 20% by weight polymerized additional monomer units, based on the total weight of the oligomer.

In embodiments, the oligomer has formula (I):

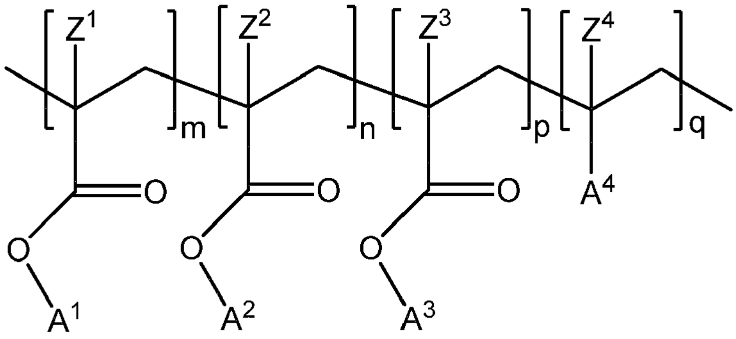

(I)

where:

m is a weight fraction of the polymerized high-$T_g$ monomer;
n is a weight fraction of the polymerized low-$T_g$ monomer;
p is a weight fraction of the polymerized chromophore monomer; and
q is a weight fraction of the at least one polymerized additional monomer.

In an example oligomer according formula (I), m may be from 0.01 to 0.95; n may be from 0.001 to 0.989, p may be from 0.001 to 0.4, and q may be from 0 to 0.2.

In some embodiments, q is 0, whereby the polymerized additional monomer is not present in the oligomer.

*High-$T_g$ monomer units*

In embodiments, the oligomer includes polymerized high-$T_g$ monomer units, which can increase a $T_g$ of the oligomer formed therefrom.

The polymerized high-$T_g$ monomer units may be identical or a combination of multiple types of discrete monomer units such as two types of discrete monomer units, three types of discrete monomer units, four types of discrete monomer units, or more than four types of discrete monomer units. In embodiments, the high-$T_g$ monomer units have a glass transition temperature ($T_g$) or a Fox Equation average $T_g$ equal to or greater than 25 °C. As defined herein, any reference herein to the $T_g$ of a monomer refers to the $T_g$ of a homopolymer formed from that monomer. In embodiments where the oligomer comprises two or more distinct high-$T_g$ monomer units, such as a combination of methyl (meth)acrylate and isobornyl (meth)acrylate, the $T_g$ refers to the Fox Equation average $T_g$ of the high-$T_g$ monomer units, as defined previously herein. In embodiments, the Fox Equation average $T_g$ of the high-$T_g$ monomer units is greater than 25 °C, such as equal to or greater than 30 °C, equal to or greater than 35 °C, equal to or greater than 40 °C, equal to or greater than 45 °C, equal to or greater than 50 °C, equal to or greater than 55 °C, equal to or greater than 60 °C, equal to or greater than 65 °C, equal to or greater than 70 °C, equal to or greater than 75 °C, or even equal to or greater than 80 °C. In embodiments, the high $T_g$ monomer units may have a $T_g$ from 25 °C to 200 °C, from 25 °C to 150 °C, from 25 °C to 130 °C, from 30 °C to 200 °C, from 30 °C to 150 °C, from 30 °C to 130 °C, from 35 °C to 200 °C, from 35 °C to 150 °C, from 35 °C to 130 °C, from 40 °C to 200 °C, from 40 °C to 150 °C, from 40 °C to 130 °C, from 45 °C to 200 °C, from 45 °C to 150 °C, from 45 °C to 130 °C, from 50 °C to 200 °C, from 50 °C to 150 °C, from 50 °C to 130 °C, from 55 °C to 200 °C, from 55 °C to 150 °C, from 55 °C to 130 °C, from 60 °C to 200 °C, from 60 °C to 150 °C, from 60 °C to 130 °C, from 65 °C to 200 °C, from 65 °C to 150 °C, from 65 °C to 130 °C, from 70 °C to 200 °C, from 70 °C to 150 °C, from 70 °C to 130 °C, from 75 °C to 200 °C, from 75 °C to 150 °C, or even from 75 °C to 130 °C, or any and all subranges formed from any of these endpoints.

The Fox Equation average $T_g$ of the high-$T_g$ monomer units is greater than the Fox Equation average $T_g$ of the low-$T_g$ monomer units. In embodiments the Fox Equation average $T_g$ of the high-$T_g$ monomer units is at least 20 °C greater than the Fox Equation average $T_g$ of the low-$T_g$ monomer units. In embodiments, the difference between the Fox Equation average $T_g$ of the high-$T_g$ monomer units and the Fox Equation average $T_g$ of the low-$T_g$ monomer units is greater than 20 °C, such as greater than 25 °C, greater than 30 °C, greater than 35 °C, greater than 40 °C, greater than 45 °C, greater than 50 °C, greater than 55 °C, greater than 60 °C, greater than 65 °C, greater than 70 °C, greater than 75 °C, greater than 80 °C, greater than 85 °C, greater than 90 °C, greater than 95 °C, greater than 100 °C, greater than 105 °C, greater than 110 °C, greater than 115 °C, or greater than 120 °C. In embodiments, the difference between the Fox Equation average $T_g$ of the high-$T_g$ monomer units and the Fox Equation average $T_g$ of the low-$T_g$ monomer units is from 20 °C to 200 °C. As non-limiting examples the difference between the Fox Equation average $T_g$ of the high-$T_g$ monomer units and the Fox Equation average $T_g$ of the low-$T_g$ monomer units may be from 20 °C to 200 °C, from 20 °C to 150 °C, from 20 °C to 120 °C, from 20 °C to 100 °C, from 20 °C to 90 °C, from 20 °C to 80 °C, from 20 °C to

70 °C, from 20 °C to 60 °C, from 20 °C to 50 °C, from 20 °C to 40 °C, from 20 °C to 30 °C, from 30 °C to 200 °C, from 30 °C to 150 °C, from 30 °C to 120 °C, from 30 °C to 100 °C, from 30 °C to 90 °C, from 30 °C to 80 °C, from 30 °C to 70 °C, from 30 °C to 60 °C, from 30 °C to 50 °C, from 30 °C to 40 °C, from 40 °C to 200 °C, from 40 °C to 150 °C, from 40 °C to 120 °C, from 40 °C to 100 °C, from 40 °C to 90 °C, from 40 °C to 80 °C, from 40 °C to 70 °C, from 40 °C to 60 °C, from 40 °C to 50 °C, from 50 °C to 200 °C, from 50 °C to 150 °C, from 50 °C to 120 °C, from 50 °C to 100 °C, from 50 °C to 90 °C, from 50 °C to 80 °C, from 50 °C to 70 °C, from 50 °C to 60 °C, from 60 °C to 200 °C, from 60 °C to 150 °C, from 60 °C to 120 °C, from 60 °C to 100 °C, from 60 °C to 90 °C, from 60 °C to 80 °C, from 60 °C to 70 °C, from 70 °C to 200 °C, from 70 °C to 150 °C, from 70 °C to 120 °C, from 70 °C to 100 °C, from 70 °C to 90 °C, from 70 °C to 80 °C, from 80 °C to 200 °C, from 80 °C to 150 °C, from 80 °C to 120 °C, from 80 °C to 100 °C, or from 80 °C to 90 °C, or any and all subranges formed from any of these endpoints.

In embodiments, $A^1$ of formula (I) is $(C_1-C_{30})$hydrocarbyl or $(C_1-C_{30})$heterohydrocarbyl. For instance, in embodiments, $A^1$ is chosen from methyl, ethyl, isopropyl, isobutyl, tert-butyl, a substituted or unsubstituted $(C_6-C_{12})$cycloalkyl, or combinations thereof. In embodiments, $A^1$ is chosen from methyl, tert-butyl, isobornyl, cyclohexyl, or 3,3,5-trimethylcyclohexyl, or combinations thereof.

In embodiments, $Z^1$ of formula (I) is -H or $-CH_3$.

In embodiments, the high-$T_g$ monomer units can include (meth)acrylate monomers, including acrylate monomers and methacrylate monomers.

In embodiments, the high-$T_g$ monomer units are monovalent. In other embodiments, the high-$T_g$ monomer units can be multivalent, where the individual monomer unit comprises two or more active sites that participate in crosslinking upon curing. Examples of monovalent monomer units can include ethyl (meth)acrylate and tert-butyl acrylate. Examples of multivalent monomer units can include divalent monomer units, such as dicyclopentadienyl acrylate.

Further examples of high-$T_g$ monomer units in the oligomers herein include but are not limited to monomer units such as 2-phenylethyl methacrylate, neopentyl methacrylate, 3,3,5-trimethylcyclohexyl acrylate, tert-butyl methacrylate, octadecyl methacrylate, octadecyl acrylate, glycidyl methacrylate, propyl methacrylate, tetrahydrofurfuryl methacrylate, benzyl methacrylate, isobutyl methacrylate, glycidyl methacrylate, ethyl methacrylate, 2,2,3,3-tetrafluoropropyl methacrylate, 2-hydroxypropyl methacrylate, 2,2,2-trifluoroethyl methacrylate, 2-hydroxyethyl methacrylate, isopropyl methacrylate, isobornyl acrylate, methyl (meth)acrylate, butyl cyanoacrylate, isobornyl methacrylate, phenyl methacrylate, 2-cyanobutyl acrylate, tert-butyl methacrylate, cyclohexyl acrylate, cyclohexyl methacrylate, 4-tert-butylcyclohexyl acrylate, 4-tert-butylcyclohexyl methacrylate, ethyl cyanoacrylate, methyl cyanoacrylate, 3,3,5-trimethylcyclohexyl acrylate, 3,3,5-trimethylcyclohexyl methacrylate, a substituted or unsubstituted $(C_6-C_{12})$cycloalkyl (meth)acrylate, adamantyl (meth)acrylate, or combinations thereof.

The weight fraction of the polymerized high-$T_g$ monomer units in the oligomer will vary depending on desired properties of the oligomer, such as $T_g$, molecular weight, and gel content after curing.

As described herein, m of formula (I) is a weight fraction of the polymerized high-$T_g$ monomer. In further embodiments, m is greater than or equal to 0.01, such as greater than or equal to 0.05, greater than or equal to 0.1, greater than or equal to 0.15, greater than or equal to 0.2, greater than or equal to 0.25, greater than or equal to 0.30, greater than or equal to 0.35, greater than or equal to 0.40, greater than or equal to 0.45, greater than or equal to 0.50, greater than or equal to 0.55, or greater than or equal to 0.60. In embodiments, m is from 0.10 to 0.95, from 0.10 to 0.95, from 0.10 to 0.90, from 0.10 to 0.85, from 0.10 to 0.80, from 0.10 to 0.75, from 0.10 to 0.70, from 0.10 to 0.60, from 0.10 to 0.50, from 0.10 to 0.40, from 0.10 to 0.30, from 0.10 to 0.20, from 0.20 to 0.95, from 0.20 to 0.90, from 0.20 to 0.85, from 0.20 to 0.80, from 0.20 to 0.70, from 0.20 to 0.60, from 0.20 to 0.50, from 0.20 to 0.40, from 0.20 to 0.30, from 0.30 to 0.95, from 0.30 to 0.90, from 0.30 to 0.85, from 0.30 to 0.80, from 0.30 to 0.70, from 0.30 to 0.60, from 0.30 to 0.50, from 0.30 to 0.40, from 0.40 to 0.95, from 0.40 to 0.90, from 0.40 to 0.85, from 0.40 to 0.80, from 0.40 to 0.70, from 0.40 to 0.60, from 0.40 to 0.50, from 0.50 to 0.95, from 0.50 to 0.90, from 0.50 to 0.85, from 0.50 to 0.95, from 0.50 to 0.90, from 0.50 to 0.85, from 0.50 to 0.80, from 0.50 to 0.70, from 0.50 to 0.60, from 0.60 to 0.95, from 0.60 to 0.90, from 0.60 to 0.85, from 0.60 to 0.80, from 0.60 to 0.70, from 0.70 to 0.95, from 0.70 to 0.90, from 0.70 to 0.85, or from 0.70 to 0.80.

It should be understood that, when the oligomer includes more than one discrete type of polymerized high $T_g$ monomer unit, the weight fraction m of the polymerized high $T_g$ monomer units in the oligomer equals the sum of the individual weight fractions of every discrete type of polymerized high $T_g$ monomer unit in the oligomer.

*Low-$T_g$ monomer units*

In embodiments, the oligomer includes polymerized low-$T_g$ monomer units. The polymerized low-$T_g$ monomer units may be identical or a combination of multiple types of discrete monomer units such as two types of discrete monomer units, three types of discrete monomer units, four types of discrete monomer units, or more than four types of discrete monomer units. In embodiments, the low-$T_g$ monomer units can have a glass transition temperature ($T_g$) less than 25 °C or a Fox Equation average $T_g$ less than 25 °C. As defined herein, any reference herein to the $T_g$ of a monomer refers to the $T_g$ of a homopolymer formed from that monomer. In embodiments where the oligomer comprises two or more

distinct low-$T_g$ monomer units, the $T_g$ refers to the Fox Equation average $T_g$ of the low-$T_g$ monomer units, as defined previously herein. In embodiments, the low-$T_g$ monomer units have a Fox Equation average $T_g$ of less than 25 °C, such as less than 20 °C, less than 15 °C, less than 10 °C, less than 5 °C, less than 0 °C, less than -5 °C, less than -10 °C, less than -15 °C, less than -20 °C, or less than -30 °C. In embodiments, the low-$T_g$ monomer units have a Fox Equation average $T_g$ of from -150 °C to 24 °C, such as preferably -80 °C to 0 °C, and most preferably from -60 °C to -10 °C.

In embodiments, $A^2$ of formula (I) is ($C_2$-$C_{30}$)hydrocarbyl or ($C_2$-$C_{30}$)heterohydrocarbyl. In embodiments, $A^2$ is linear or branched ($C_2$-$C_{30}$)alkyl, or combinations thereof. In embodiments, $A^2$ is linear or branched ($C_4$-$C_{30}$)alkyl, or combinations thereof. In embodiments, $A^2$ is chosen from n-butyl, isobutyl, hexyl, 2-ethylhexyl, isooctyl, isodecyl, tridecyl, lauryl, or combinations thereof.

In embodiments, $Z^2$ of formula (I) is -H or $-CH_3$.

In embodiments, the low-$T_g$ monomer units are monovalent. In embodiments, the low-$T_g$ monomer units can include (meth)acrylate ester monomers, including acrylate ester monomers and methacrylate ester monomers. Examples of acrylate ester monomers include sec-butyl acrylate monomers and tert-butyl acrylate monomers. Examples of methacrylate ester monomers include butyl methacrylate monomers and pentyl methacrylate monomers.

Further examples of low $T_g$ monomer units of the oligomer include, but are not limited to, monomer units chosen from n-butyl (meth)acrylate, isobutyl (meth)acrylate, hexyl (meth)acrylate, 2-ethylhexyl (meth)acrylate, isooctyl (meth)acrylate, isodecyl (meth)acrylate, tridecyl (meth)acrylate, lauryl (meth)acrylate, nonyl acrylate, decyl (meth)acrylate, hexyl (meth)acrylate, dodecyl (meth)acrylate, butyl acrylate, 2-ethylhexyl acrylate, octyl (meth)acrylate, propyl acrylate, 4-cyanobutyl acrylate, isobutyl acrylate, 2,2,3,3-tetrafluoropropyl acrylate, ethyl acrylate, sec-butyl acrylate, dodecyl acrylate, tetrahydro furfuryl acrylate, tetradecyl (meth)acrylate, isopropyl acrylate, pentyl (meth)acrylate, 2-cyanoethyl acrylate, benzyl acrylate, phenoxyethyl acrylate, cyclohexyl acrylate, hexadecyl (meth)acrylate, 1-(dimethylamino)ethyl (meth)acrylate, 1-(diethylamino)ethyl (meth)acrylate, cyanomethyl acrylate, 2-methyl butyl acrylate, 2-octyl acrylate, or combinations thereof.

The weight fraction of the polymerized low-$T_g$ monomer units in the oligomer will vary depending on desired properties of the oligomer, such as $T_g$, molecular weight, and gel content after curing.

As described herein, n of formula (I) is a weight fraction of the polymerized low-$T_g$ monomer. In embodiments, n is greater than or equal to 0.001, such as greater than or equal to 0.02, greater than or equal to 0.05, greater than or equal to 0.10, greater than or equal to 0.15, greater than or equal to 0.20, greater than or equal to 0.25, greater than or equal to 0.30, greater than or equal to 0.35, greater than or equal to 0.40, greater than or equal to 0.45, greater than or equal to 0.50, greater than or equal to 0.55, greater than or equal to 0.60, greater than or equal to 0.65, greater than or equal to 0.70, greater than or equal to 0.75, or greater than or equal to 0.80. In embodiments, n is from 0.001 to 0.989, from 0.001 to 0.90, from 0. 001 to 0.80, from 0. 001 to 0.70, from 0. 001 to 0.60, from 0. 001 to 0.50, from 0.001 to 0.40, from 0. 001 to 0.30, from 0.001 to 0.20, from 0.001 to 0.10, from 0.001 to 0.05, from 0.01 to 0.989, from 0.01 to 0.90, from 0.01 to 0.80, from 0. 01 to 0.70, from 0. 01 to 0.60, from 0. 01 to 0.50, from 0.01 to 0.40, from 0.01 to 0.30, from 0.01 to 0.20, from 0.01 to 0.10, from 0.01 to 0.05, from 0.05 to 0.989, from 0.05 to 0.90, from 0.05 to 0.80, from 0.05 to 0.70, from 0.05 to 0.60, from 0.05 to 0.50, from 0.05 to 0.40, from 0.05 to 0.30, from 0.05 to 0.20, from 0.05 to 0.10, from 0.10 to 0.989, from 0.10 to 0.90, from 0.10 to 0.80, from 0.10 to 0.70, from 0.10 to 0.60, from 0.10 to 0.50, from 0.10 to 0.40, from 0.10 to 0.30, from 0.10 to 0.20, from 0.20 to 0.989, from 0.20 to 0.90, from 0.20 to 0.80, from 0.20 to 0.70, from 0.20 to 0.60, from 0.20 to 0.50, from 0.20 to 0.40, from 0.20 to 0.30, from 0.30 to 0.989, from 0.30 to 0.90, from 0.30 to 0.80, from 0.30 to 0.70, from 0.30 to 0.60, from 0.30 to 0.50, from 0.30 to 0.40, from 0.40 to 0.989, from 0.40 to 0.90, from 0.40 to 0.80, from 0.40 to 0.70, from 0.40 to 0.60, from 0.40 to 0.50, from 0.50 to 0.989, from 0.50 to 0.90, from 0.50 to 0.80, from 0.50 to 0.70, from 0.50 to 0.60, from 0.60 to 0.989, from 0.60 to 0.90, from 0.60 to 0.80, from 0.60 to 0.70, from 0.70 to 0.989, from 0.70 to 0.90, from 0.70 to 0.80, from 0.80 to 0.989, from 0.80 to 0.90, or from 0.90 to 0.989.

It should be understood that, when the oligomer includes more than one discrete type of polymerized low $T_g$ monomer unit, the weight fraction n of the polymerized low $T_g$ monomer units in the oligomer equals the sum of the individual weight fractions of every discrete type of polymerized low $T_g$ monomer unit in the oligomer.

The weight ratio of low $T_g$ monomer units to high $T_g$ monomer units may be adjusted depending on desired properties of the oligomer, such as $T_g$ and gel content after curing. In embodiments, the weight ratio of low $T_g$ monomer units to high $T_g$ monomer units in the oligomer may be from 10:1 to 1:9, from 5:1 to 1:9, from 2:1 to 1:9, from 1:1 to 1:9, from 10:1 to 1:5, from 5:1 to 1:5, from 2:1 to 1:5, from 1:1 to 1:5, from 10:1 to 1:5, or any and all subranges formed from any of these endpoints.

*Chromophore monomer units*

In addition to at least one polymerized high-$T_g$ monomer unit and at least one polymerized low-$T_g$ monomer unit, the oligomers further include at least one polymerized chromophore monomer unit. The polymerized chromophore monomer units may act as a photoinitiator and induce curing of the oligomer upon radiation. A photoinitiator is generally

a moiety that, on absorption of light, generates reactive species (ions or radicals) and initiates one or several chemical reactions or transformations.

Photoinitiators may include free-radical photoinitiators. The photoinitiator may be selected so that it is susceptible to activation by photons of the wavelength associated with the actinic radiation (e.g., ultraviolet radiation, visible light) intended to be used to cure a curable composition. Norrish Type II (i.e., non-cleavable) photoinitiator moieties do not break down upon excitation, thus providing fewer possibilities for the leaching of small molecules from the matrix composition. For reference, see e.g. A. Gilbert, J. Baggott: "Essentials of Molecular Photochemistry", Blackwell, London, 1991). Excited non-cleavable photoinitiators do not break down to radicals upon excitation, but extract a hydrogen atom from an organic molecule or, more efficiently, extract an electron from an electron donor (such as an amine or a thiol). The electron transfer produces a radical anion on the photoinitiator and a radical cation on the electron donor. This is followed by proton transfer from the radical cation to the radical anion to produce two uncharged radicals; of these the radical on the electron donor is sufficiently reactive to abstract a hydrogen atom from most substrates.

The photoinitiator may be a chromophore. Benzophenones and related ketones such as thioxanthones, xanthones, anthraquinones, fluorenones, dibenzosuberones, benzils, and phenyl ketocoumarins are examples of Norrish Type II chromophores. Most amines with a C-H bond in an $\alpha$-position to the nitrogen atom and many thiols are electron donors. Some titanocenes are Norrish Type II chromophores within the scope of the chromophore monomers herein.

In embodiments, the polymerized chromophore monomer units are (meth)acrylate ester monomers having a pendent Norrish Type II chromophore. That is, the Norrish Type II chromophore is not positioned on the terminal ends of the monomers.

Any of the above-discussed Norrish Type II chromophores may be the pendent moiety of the chromophore monomer units of oligomer. In embodiments, the Norrish Type II chromophore is chosen from benzophenones, thioxanthones, or titanocenes. In a specific example, the Norrish Type II chromophore is a benzophenone.

In embodiments, $A^3$ of formula (I) is X or -L-X, where L is a ($C_1$-$C_{10}$)heterohydrocarbylene linker and X is a monovalent residue of the Norrish Type II chromophore. As used in this disclosure, the term "residue" shall mean the product of a reactant, such as the moiety remaining from a monomer in a polymer like a portion of a Norrish Type II chromophore. In other embodiments, $A^3$ is a monovalent residue of the Norrish Type II chromophore. In embodiments, X may be a monovalent residue of any one of the above-discussed Norrish Type II chromophores. In embodiments, $A^3$ is a monovalent residue of benzophenone. In embodiments, $A^3$ has formula (II):

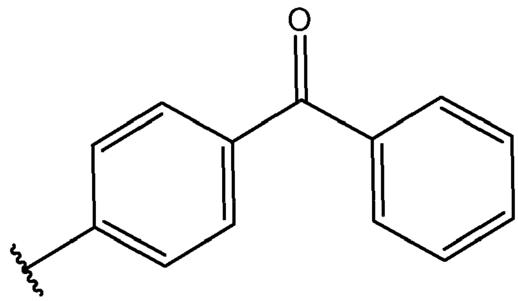

(II).

In embodiments, $Z^3$ of formula (I) is -H or $-CH_3$..

In embodiments, $A^3$ of formula (I) is a residue comprising a monovalent radical comprising a moiety chosen from a thioxanthone, an anthraquinone, or a camphorquinone. According to one or more embodiments, $A^3$ is a residue comprising a monovalent radical comprising a thioxanthone.

In particular, $A^3$ of formula (I) may have the following formula (III) or (IV):

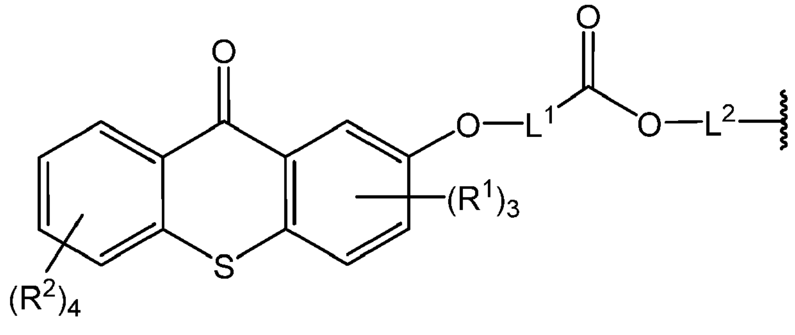

(III)

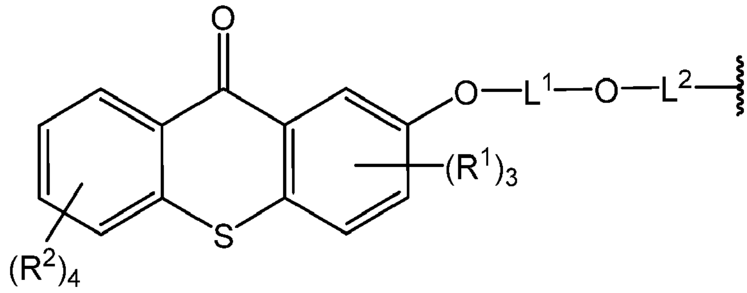

(IV)

wherein, in formula (III) and formula (IV):

$L^1$ is an alkylene;

$L^2$ is a divalent linker comprising at least 2 carbon atoms;

each $R^1$ and $R^2$ are independently selected from -H, halogen, alkyl, cycloalkyl, heterocycloalkyl, alkoxy, aryloxy, thioalkyl, thioaryl, alkenyl, alkynyl, aryl, aralkyl, alkaryl, heteroaryl, $-C(=O)R^a$, $-NR^bR^c$, alkylamino, alkylthiol, haloalkyl, $-NO_2$, -CN, $-C(=O)OR^d$, $-C(=O)NR^bR^c$;

$R^a$ is selected from an optionally substituted alkyl, an optionally substituted cycloalkyl, an optionally substituted heterocycloalkyl and an optionally substituted aryl; and

$R^b$, $R^c$ and $R^d$ are independently selected from -H, alkyl and aryl.

In particular, in formula (III) and formula (IV), $R^1$ and $R^2$ are independently -H, halogen, alkyl or alkoxy. More particularly, $R^1$ and $R^2$ are independently H or alkyl. Even more particularly $R^1$ and $R^2$ are independently H or methyl. More particularly still, $R^1$ and $R^2$ are all -H.

In formula (III) and formula (IV), $L^1$ is an alkylene. In particular, each $L^1$ may independently be a linear or branched alkylene having from 1 to 6, from 1 to 4 or from 1 to 2 carbon atoms. More particularly, $L^1$ is $-CH_2-$ or $-CH(CH_3)-$. Even more particularly, $L^1$ is $-CH_2-$.

In formula (III) and formula (IV), $L^2$ is a divalent linker comprising at least 2 carbon atoms. $L^2$ may be an aromatic, aliphatic or cycloaliphatic hydrocarbon linker, a polyether linker, a polyester linker, a polycarbonate linker, a polycaprolactone linker, a polyurethane linker, a polyorganosiloxane linker, a polybutadiene linker, and combinations thereof. In particular, $L^2$ may be selected from an aromatic, aliphatic or cycloaliphatic hydrocarbon linker, a polyether linker, a polyester linker and combinations thereof.

In formula (III) and formula (IV), $L^2$ may be $-CH_2-CH(OH)-CH_2-$ or the residue of a diol. As used herein, the term "residue of a diol" means the linker obtained by removing two OH groups from a diol. Examples of suitable diols include 1,3-propylene glycol, 1,3- or 1,4-butylene glycol, 1,5-pentanediol, 1,6-hexanediol, 1,8-octanediol, 1,9-nonanediol, 1,10-decanediol, 1,12-dodecanediol, 2-methyl-1,3-propanediol, 2,2-diethyl-1,3-propanediol, 3-methyl-1,5-pentanediol, 3,3-dimethyl-1,5-pentanediol, neopentyl glycol, 2,4-diethyl-1,5-pentanediol, cyclohexanediol, cyclohexane-1,4-dimethanol, norbornene dimethanol, norbornane dimethanol, tricyclodecanediol, tricyclodecane dimethanol, bisphenol A, B, F or S, hydrogenated bisphenol A, B, F or S, di-, tri- or tetraethylene glycol, di-, tri- or tetrapropylene glycol, di-, tri- or tetrabutylene glycol, a polyethylene glycol, a polypropylene glycol, a polytetramethylene glycol, a poly(ethylene glycol-co-propylene glycol), a dianhydrohexitol (i.e. isosorbide, isomannide, isoidide), a polybutadiene polyol, a polyester polyol, a polyether polyol, a polyorganosiloxane polyol, a polycarbonate polyol as well as the alkoxylated (e.g., ethoxylated and/or propoxylated) derivatives thereof and the derivatives obtained by ring-opening polymerization of ε-caprolactone initiated with one of the aforementioned polyols.

In formula (III) and formula (IV), $L^2$ may be $-CH_2-CH(OH)-CH_2-$ or a divalent linker selected from one of formulas (A)-(E):

$-(CR^{22}R'^{22})_a-$ (A)

$-[(CR^{23}R'^{23})_b-O]_c-(CR^{23}R'^{23})_b-$ (B)

$-[(CR^{24}R'^{24})_d-O]_e-(CR^{25}R'^{25})_f-[O-(CR^{26}R'^{26})_{d'}]_{e'}-$ (C)

$$-[(CR^{27}R'^{27})_g-C(=O)O]_h-(CR^{28}R'^{28})_i- \text{ or } -(CR^{28}R'^{28})_i-[(CR^{27}R'^{27})_g-C(=O)O]_h- \quad (D)$$

$$-[(CR^{29}R'^{29})_j-O-C(=O)-(CR^{30}R'^{30})_k-C(=O)-O]_l-(CR^{29}R'^{29})_j- \quad (E)$$

wherein

$R^{22}$, $R'^{22}$, $R^{25}$ $R'^{25}$, $R^{29}$, $R'^{29}$, $R^{30}$ and $R'^{30}$ are independently H or alkyl;

$R^{23}$ $R'^{23}$, $R^{24}$, $R'^{24}$, $R^{26}$, $R'^{26}$, $R^{27}$, $R'^{27}$, $R^{28}$ and $R'^{28}$ are independently H or methyl;

a is 2 to 20;

b, d, and d' are independently 2 to 4;

c is 1 to 20;

e and e' are independently 0 to 20 with the proviso that at least one of q and q' is not 0;

f is 2 to 20;

g is 3 to 12;

h is 1 to 20;

i is 2 to 8;

j is 2 to 20;

k is 2 to 30;

1 is 1 to 20.

In particular, in formula (III) and formula (IV), $L^2$ may be $-CH_2-CH(OH)-CH_2-$ or a divalent linker selected from an alkylene such as 1,3-propanediyl, 1,3- or 1,4-butanediyl, 1,5-pentanediyl, 1,6-hexanediyl, 1,8-octanediyl, 1,9-nonanediyl, 1,10-decanediyl, 1,12-decanediyl, 2-methyl-1,3-propanediyl, 2,2-diethyl-1,3-propanediyl, 3-methyl-1,5-pentanediyl, 3,3-dimethyl-1,5-pentanediyl, 2,2-dimethyl-1,3-propanediyl, 2,4-diethyl-1,5-pentanediyl; an alkoxylated (in particular an ethoxylated and/or propoxylated) derivative of the aforementioned alkylenes; an esterified (in particular by ring-opening polymerization of a lactone such as ε-caprolactone) derivative of the aforementioned alkylenes; a residue of a di-, tri-, tetra- or polyoxyalkene without the OH groups such as di-, tri- or tetraethylene glycol, di-, tri- or tetrapropylene glycol, di-, tri- or tetrabutylene glycol, polyethylene glycol, polypropylene glycol, polybutylene glycol, poly(ethylene glycol-co-propylene glycol).

In one embodiment, $A^3$ of formula (I) is according to one of the following formulas (IIIa) or (IIIb):

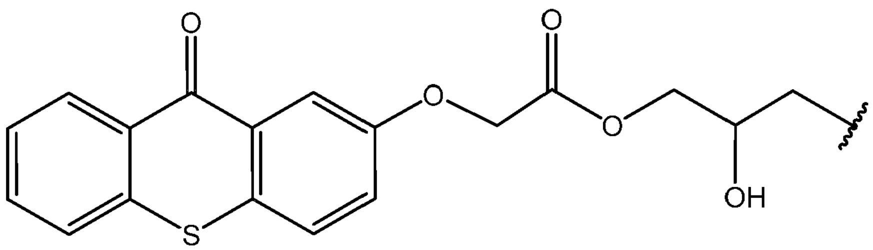

(IIIa)

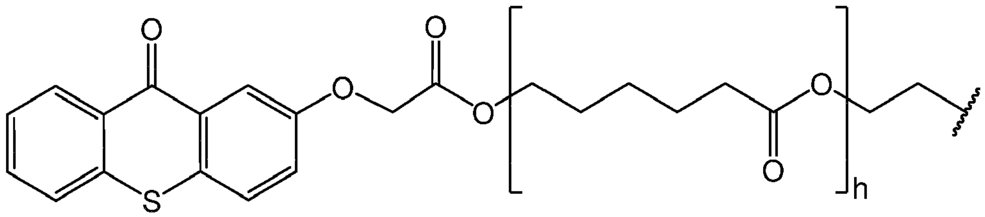

(IIIb)

wherein h is 1 to 20.

Other suitable linker groups may be used, including others not including a carbonyl group.

The weight fraction of the polymerized chromophore monomer units in the oligomer may be varied based on factors that are known in the art, such as desired cure time among other factors. As described herein, p of formula (I) is a weight fraction of the polymerized chromophore monomer. In embodiments, p is greater than or equal to 0.001, such as greater than or equal to 0.005, or greater than or equal to 0.01. In embodiments, p is from 0.001 to 0.40, from 0.001 to 0.30, from 0.001 to 0.20, from 0.001 to 0.10, from 0.001 to 0.05, from 0.001 to 0.03, from 0.005 to 0.40, from 0.005 to 0.30, from 0.005 to 0.20, from 0.005 to 0.10, from 0.005 to 0.05, from 0.005 to 0.03, or from 0.005 to 0.02.

It should be understood that, when the oligomer includes more than one discrete type of polymerized chromophore monomer unit, the weight fraction p of the polymerized chromophore monomer units in the oligomer equals the sum of the individual weight fractions of every discrete type of polymerized chromophore monomer unit. Furthermore, it should be understood that, even if a chromophore monomer unit may be characterized based on $T_g$ alone as a high $T_g$ monomer or a low $T_g$ monomer, any monomer including a pendant chromophore is considered to be neither a high $T_g$ monomer nor a low $T_g$ monomer with respect to calculating the weight fractions m and n in formula (I).

*Additional monomer units*

The oligomers disclosed herein optionally include at least one polymerized additional monomer unit. The additional monomer units can include monomer units that are copolymerized with the high-$T_g$ monomer units, the low-$T_g$ monomer units, and the chromophore monomer units. In embodiments, additional monomer units can include other unsaturated monomer units such as vinyl amides, vinyl ethers, and vinyl esters. In embodiments, the additional monomer units can include other monomer units that are polymerized in the oligomer such as styrene derivatives and maleimides.

In embodiments, the additional monomer units can comprise epoxy, ether, ester, acid, or ketone functionality that are not polymerized in the oligomer. For example, the additional monomer units may comprise a caprolactone-extended acrylate (SR495B, Sartomer), cyclic trimethylolpropane formal acrylate (SR531, Sartomer) propoxylated tetrahydrofurfuryl acrylate (SR611, Sartomer), beta-carboxyethylacrylate, glycidyl methacrylate, or 2-(2-ethoxyethoxy)ethyl acrylate (SR256).

In embodiments, the additional monomer units can be or can include a monomer that acts synergistically with the polymerized chromophore monomer units and/or reduce oxygen inhibition. Oxygen inhibition may limit surface curing and hence limit the performances of a resulting cured product.

Common synergist functionality that functions as a synergist for a Type II photoinitiator may include tertiary amine functionality, alkylenoxy functionality, mercaptan groups, or other sources of readily abstractable hydrogen. Typical addditional monomer units which contain synergist functionality are exemplified by monomers such as dimethylaminoethylacrylate (DMAEMA), dimethylaminoethylmethacrylate (DMAEA), N-vinylpyrrolidone (NVP), N-vinylcaprolactam (VCAP), acryloxymorpholine (ACMO), dimethyl acrylamide (DMAC), and poly(ethylenoxide)monoacrylate.

In embodiments, the additional monomer units can comprise an amine synergist. Some examples of amine synergists include tertiary amines. When an amine-synergist containing monomer is included in the oligomer in conjunction with the Norrish Type II chromophore of the polymerized chromophore monomer unit, the tertiary amine provides an active hydrogen donor site for the excited triplet state of the chromophore, thus producing a reactive alkyl-amino radical that subsequently can initiate polymerization. Tertiary amines are also able to convert unreactive peroxy species, formed by reaction between oxygen and free radicals, to reactive alkyl-amino radicals, thus reducing the effects of oxygen on curing.

Examples of amine synergists that may be a component of the polymerized additional monomer include low-molecular weight tertiary amines (i.e. tertiary amines having a molecular weight of less than 200 g/mol) such as triethanol amine, N-methyldiethanol amine. Other types of amine synergists are aminobenzoates, polymerizable aminobenzoates, polymeric aminobenzoates and mixtures thereof. Examples of aminobenzoates include ethyl 4-(dimethylamino)benzoate (EDB), pentyl 4-(dimethylamino)benzoate, 2-ethylhexyl 4-(dimethylamino)benzoate and 2-butoxyethyl 4-(dimethylamino)benzoate (BEDB).

In embodiments, the additional monomer units are (meth)acrylate monomers having a pendent amine functionality.

Any of the above-discussed synergists or amine-based synergists may be the pendent residue in the additional monomer units of the oligomers herein.

In embodiments, $A^4$ of formula (II) is a ($C_1$-$C_{30}$)hydrocarbyl or a ($C_1$-$C_{30}$)heterohydrocarbyl. $A^4$ may be a monovalent residue of any one of the above-discussed synergists. In embodiments, $A^4$ is selected from dimethylaminomethyl, dimethylaminoethyl, morpholino, dimethylamino, or combinations thereof.

In embodiments, $Z^4$ of formula (I) is -H or $-CH_3$

The weight fraction of the polymerized additional monomer units in the oligomer may be varied depending on factors well-known in the art, such as desired cure time and desired extent of cure. As described herein, q of formula (I) is a weight fraction of the polymerized additional monomer. In embodiments, q is 0. In other embodiments, q is greater than or equal to 0.001, such as greater than or equal to 0.005, or greater than or equal to 0.01. In embodiments, q is from 0.001 to 0.20, from 0.001 to 0.10, from 0.001 to 0.05, from 0.001 to 0.03, from 0.005 to 0.20, from 0.005 to 0.10, from 0.005 to 0.05, from 0.005 to 0.03, or from 0.005 to 0.02.

*Properties of the Oligomer*

Oligomers described herein can be formed by controlled polymerization of the high-$T_g$ monomer units, the low-$T_g$ monomer units, the chromophore monomer units, and optionally, the at least one additional monomer unit. Common methods known in the art, such as but not limited to solution acrylic polymerization can be used to form the oligomers.

In embodiments, the oligomer may have a weight average molecular weight of at least 10,000 grams per mole (g/mol). In embodiments, the oligomer may have a weight average molecular weight from 10,000 g/mol to 600,000 g/mol. In embodiments, the oligomer may have a weight average molecular weight equal to or greater than 10,000 g/mol, equal to or greater than 25,000 g/mol, or even equal to or greater than 50,000 g/mol. In embodiments, the oligomer may have a weight average molecular weight equal to or less than 600,000 g/mol, equal to or less than 500,000 g/mol, equal to or less than 400,000 g/mol, equal to or less than 300,000 g/mol, equal to or less than 200,000 g/mol, or even equal to or less than 100,000 g/mol. In embodiments, the oligomer may have a weight average molecular weight from 10,000 g/mol to 600,000 g/mol, from 10,000 g/mol to 500,000 g/mol, from 10,000 g/mol to 400,000 g/mol, from 10,000 g/mol to 300,000 g/mol, from 10,000 g/mol to 200,000 g/mol, from 10,000 g/mol to 100,000 g/mol, from 25,000 g/mol to 600,000 g/mol, from 25,000 g/mol to 500,000 g/mol, from 25,000 g/mol to 400,000 g/mol, from 25,000 g/mol to 300,000 g/mol, from 25,000 g/mol to 200,000 g/mol, from 25,000 g/mol to 100,000 g/mol, from 50,000 g/mol to 600,000 g/mol, from 50,000 g/mol to 500,000 g/mol, from 50,000 g/mol to 400,000 g/mol, from 50,000 g/mol to 300,000 g/mol, from 50,000 g/mol to 200,000 g/mol, or even from 50,000 g/mol to 100,000 g/mol, or any and all subranges formed from any of these endpoints.

Number average molecular weight and weight average molecular weight reported herein are determined using a size exclusion chromatography (SEC) using polymethyl methacrylate reference standards and tetrahydrofuran as the solvent, unless expressly noted otherwise.

In embodiments, the oligomer can have a $T_g$ of equal to or greater than 0 °C, such as equal to or greater than 5 °C, equal to or greater than 10 °C, equal to or greater than 15 °C, equal to or greater than 20 °C, equal to or greater than 25 °C, equal to or greater than 30 °C, equal to or greater than 35 °C, equal to or greater than 40 °C, equal to or greater than 45 °C, or equal to or greater than 50 °C. In embodiments, the oligomer can have a $T_g$ of from 0 °C to 100 °C, such as from 0 °C to 90 °C, from 0 °C to 80 °C, from 0 °C to 70 °C, from 0 °C to 60 °C, from 0 °C to 50 °C, from 10 °C to 100 °C, from 10 °C to 90 °C, from 10 °C to 80 °C, from 10 °C to 70 °C, from 10 °C to 60 °C, from 10 °C to 50 °C, from 20 °C to 100 °C, from 20 °C to 90 °C, from 20 °C to 80 °C, from 20 °C to 70 °C, from 20 °C to 60 °C, or from 20 °C to 50 °C.

In embodiments, the oligomer can have a gel content of at least 10%, as measured by the method, "Method A - Gel Content", disclosed herein. For instance, the oligomer can have a gel content of at least 10%, at least 15%, at least 20%, at least 25%, at least 30%, at least 35%, at least 40%, at least 45%, at least 50%, at least 55%, or even at least 60%. In this context, the gel content is measured based on the neat oligomer (i.e., with no other compounds, such as diluents).

As a non-limiting example, the oligomer may have formula (V):

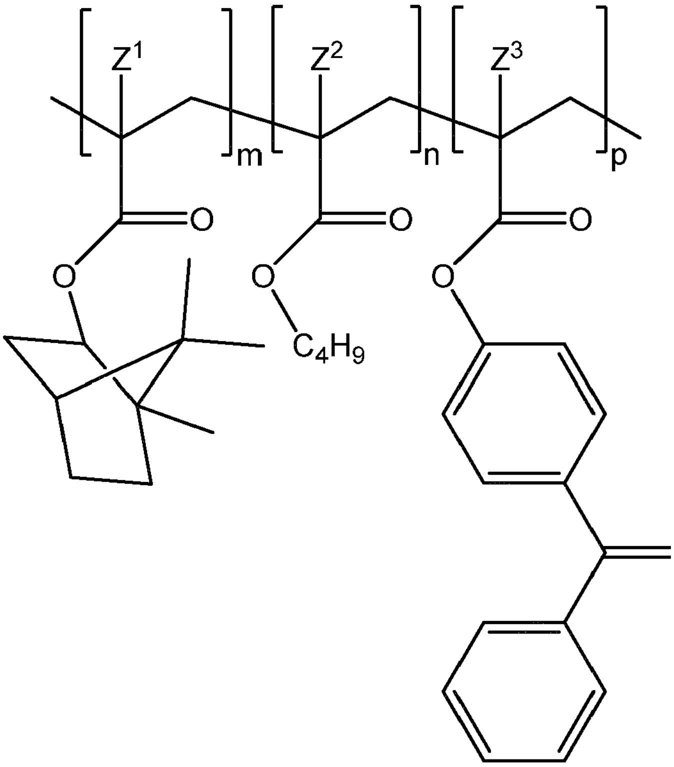

(III)

where m is from 0.2 to 0.8, n is from 0.1 to 0.8, and p is from 0.001 to 0.2.

In embodiments $Z^1$, $Z^2$, and $Z^3$ of formula (V) are independently -H or $-CH_3$. For instance, in embodiments, $Z^1$ is $-CH_3$ and both $Z^2$ and $Z^3$ are -H.

*Ultraviolet curable composition*

In embodiments, an ultraviolet curable composition can comprise at least one of the oligomers described herein. In embodiments, the ultraviolet curable composition may not include any additional photoinitiators, other than the polymerized chromophore monomer units of the oligomer. That is, in embodiments, the oligomer can be cured upon irradiation without any additional photoinitiators. In other embodiments, the ultraviolet curable composition can comprise one or more photoinitiators in addition to the polymerized chromophore monomer units of the oligomer. In embodiments, the ultraviolet curable composition can comprise one or more (meth)acrylate monomers or oligomers, diluents, (meth)acrylate oligomers, fillers, photoinitiators, slip agents, thickeners, slip agents, hindered amine light stabilizers, ultraviolet absorbing monomers, or other auxiliary additives. In embodiments, at least one (meth)acrylate oligomer is included in the ultraviolet curable composition and is chosen from at least one of urethane acrylate and urethane methacrylate, and at least one (meth)acrylate monomer is included and is chosen from at least one of 2-hydroxyethyl methacrylate and isobornyl methacrylate.

*Coating*

In embodiments, a coating can be formed by curing the ultraviolet curable composition. The process for the preparation of a cured coating according to embodiments comprises curing the ultraviolet curable composition. In particular, the ultraviolet curable composition may be cured by exposing the composition to radiation. More particularly, the ultraviolet curable composition may be fully cured by exposing the composition to ultraviolet (UV) radiation. The ultraviolet curable composition may advantageously be cured by exposing the composition to a LED light source.

Prior to curing, the ultraviolet curable composition may be applied to a substrate surface in any known conventional manner, for example, by spraying, jetting, knife coating, roller coating, casting, drum coating, dipping, and the like and combinations thereof. Indirect application using a transfer process may also be used.

The substrate on which the ultraviolet curable composition is applied and cured may be any kind of substrate. When used as an adhesive, the polymerizable composition may be placed between two substrates and then cured, the cured composition thereby bonding the substrates together to provide an adhered article. Ultraviolet curable compositions in accordance with the present disclosure may also be formed or cured in a bulk manner (e.g., the ultraviolet curable

composition may be cast into a suitable mold and then cured).

A plurality of layers of the ultraviolet curable composition in accordance with the present disclosure may be applied to a substrate surface; the plurality of layers may be simultaneously cured (by exposure to a single dose of radiation, for example) or each layer may be successively cured before application of an additional layer of the ultraviolet curable composition.

In embodiments, the coating can have a gel content of from 30% to 99%, as measured by the method, "Method A - Gel Content", disclosed herein. For instance, the coating can have a gel content of from 30% to 95%, from 40% to 80%, from 50% to 70%, or any and all subranges formed from any of these endpoints.

Without intending to be bound by any particular theory, it is believed that the oligomer comprising the polymerized high-$T_g$ monomer units, the polymerized low-$T_g$ monomer units, the polymerized chromophore monomer units, and optionally, the at least one polymerized additional monomer unit can be cured to form a coating with a high gel content, and thus a high degree of crosslinking. Further, it is believed that the oligomer having a $T_g$ of equal to or greater than 0 °C, can be cured to form a coating with a higher gel content than conventional oligomers that also have a $T_g$ of equal to or greater than 0 °C. It is believed that the oligomers comprising the polymerized high-$T_g$ monomers, as disclosed herein, may undergo a greater degree of hydrogen abstraction and crosslinking during curing, which may improve the strength of coatings formed from oligomers described herein.

EXAMPLES

The various embodiments disclosed herein will be further clarified by the following examples. The examples are illustrative in nature, and should not be understood to limit the embodiments disclosed herein.

Material

The following materials were used in the examples:

[Table 1]

| Abbreviation | Chemical name | Supplier |
|---|---|---|
| BENZO | 4-acryloyloxy benzophenone | Sigma Aldrich Chemical Company |
| MEK | methyl ethyl ketone | Sigma Aldrich Chemical Company |
| BA | butyl acrylate | Sigma Aldrich Chemical Company |
| TBA | tert-butyl acrylate | Sigma Aldrich Chemical Company |
| TBMA | tert-butyl methacrylate | Sigma Aldrich Chemical Company |
| MMA | methyl methacrylate | Sigma Aldrich Chemical Company |
| IBOMA (SR423) | isobornyl methacrylate | Sartomer |
| SR506A | isobornyl acrylate | Sartomer |
| SR420 | 3,3,5-trimethylcyclohexyl acrylate | Sartomer |
| SR421A | 3,3,5-trimethylcyclohexyl methacrylate | Sartomer |
| SR217 | 4-tertbutyl cylclohexyl acrylate | Sartomer |
| SR218 | 4-tertbutyl cyclohexyl methacrylate | Sartomer |
| SR355 | ditrimethylolpropane tetraacrylate | Sartomer |

*Formulation*

Tables 2 shows the components (in weight percent) used to form the oligomer and certain properties of Comparative Examples C1 to C26 and Examples E1 to E21

Formulations were made by adding the components listed in Tables 2 to SR355 in a Flacktek® polypropylene cup and mixed until homogenous at 1500 rpm for minues using a Flacktek® DAC 400.2 VAC high-speed mixer.

[Table 2]

| Example | Backbone (wt%) | | Final MEK (wt%) | Weight Predicted average $T_g$ (°C) molecular weight ($M_w$) | |
|---|---|---|---|---|---|
| C1 | BA | 95 | 37.9 | -48 | 32522 |
| | MMA | 4 | | | |
| | BENZO | 1 | | | |
| C2 | BA | 80 | 42.5 | -26 | 23856 |
| | MMA | 15 | | | |
| | BENZO | 5 | | | |
| C3 | MMA | 99 | 32.8 | 109 | 14181 |
| | BENZO | 1 | | | |
| C4 | BA | 80 | 40.7 | -31 | 25162 |
| | TBA | 15 | | | |
| | BENZO | 5 | | | |
| C5 | BA | 95 | 53.4 | -49 | 21960 |
| | TBA | 4 | | | |
| | BENZO | 1 | | | |
| C6 | BA | 91.16 | 44.0 | -38 | 24958 |
| | MMA | 3.84 | | | |
| | BENZO | 5 | | | |
| E1 | BA | 54.5 | 50.0 | 0 | 19636 |
| | MMA | 44.5 | | | |
| | BENZO | 1 | | | |
| E2 | BA | 38.5 | 49.4 | 25 | 19092 |
| | MMA | 60.5 | | | |
| | BENZO | 1 | | | |
| E3 | BA | 25 | 50.1 | 50 | 16620 |
| | MMA | 74 | | | |
| | BENZO | 1 | | | |
| C7 | BA | 69.5 | 32.5 | -20 | 26563 |
| | MMA | 26.5 | | | |
| | BENZO | 1 | | | |
| C8 | BA | 62.5 | 50.0 | -13 | 33063 |
| | MMA | 36.5 | | | |
| | BENZO | 1 | | | |
| C9 | BA | 95 | 50.0 | -32.0 | 43460 |
| | IBOMA | 4 | | | |
| | BENZO | 1 | | | |
| C10 | IBOMA | 99 | 50.0 | 66.8 | 26683 |
| | BENZO | 1 | | | |

(continued)

| Example | Backbone (wt%) | | Final MEK (wt%) | Weight Predicted average $T_g$ (°C) molecular weight ($M_w$) | |
|---|---|---|---|---|---|
| C11 | BA | 69.5 | 50.0 | -8.0 | 38680 |
| | IBOMA | 29.5 | | | |
| | BENZO | 1 | | | |
| C12 | BA | 91.2 | 50.0 | -28.3 | 48047 |
| | IBOMA | 3.8 | | | |
| | BENZO | 5 | | | |
| C13 | BA | 54.5 | 50.0 | -1.0 | 38596 |
| | IBOMA | 44.5 | | | |
| | BENZO | 1 | | | |
| E4 | BA | 38.5 | 50.0 | 24.0 | 34904 |
| | IBOMA | 60.5 | | | |
| | BENZO | 1 | | | |
| E5 | BA | 25 | 50.0 | 50.0 | 31343 |
| | IBOMA | 74 | | | |
| | BENZO | 1 | | | |
| C14 | BA | 62.5 | 50.0 | -20.0 | 38855 |
| | IBOMA | 36.5 | | | |
| | BENZO | 1 | | | |
| C15 | MMA | 19.2 | 50 | -10 | 31321 |
| | IBOMA | 19.2 | | | |
| | BA | 60.6 | | | |
| | BENZO | 1 | | | |
| E6 | MMA | 22.8 | 50 | 0 | 29925 |
| | IBOMA | 22.8 | | | |
| | BA | 53.4 | | | |
| | BENZO | 1 | | | |
| E7 | MMA | 30.7 | 50 | 25 | 26814 |
| | IBOMA | 30.7 | | | |
| | BA | 37.5 | | | |
| | BENZO | 1 | | | |
| E8 | MMA | 37.4 | 50 | 50 | 24125 |
| | IBOMA | 37.4 | | | |
| | BA | 24.1 | | | |
| | BENZO | 1 | | | |
| C16 | SR217 | 54.3 | 50 | -10 | 64232 |
| | BA | 44.7 | | | |
| | BENZO | 1 | | | |

(continued)

| Example | Backbone (wt%) | | Final MEK (wt%) | Weight Predicted average $T_g$ (°C) molecular weight ($M_w$) | |
|---|---|---|---|---|---|
| E9 | SR217 | 64.4 | 50 | 0 | 60937 |
| | BA | 24.6 | | | |
| | BENZO | 1 | | | |
| E10 | SR217 | 86.9 | 50 | 25 | 66424 |
| | BA | 12.2 | | | |
| | BENZO | 1 | | | |
| E11 | SR217 | 99 | 50 | 40.6 | 69056 |
| | BENZO | 1 | | | |
| C17 | SR218 | 35.7 | 50 | -10 | 42744 |
| | BA | 63.3 | | | |
| | BENZO | 1 | | | |
| E12 | SR218 | 42.4 | 50 | 0 | 41389 |
| | BA | 56.6 | | | |
| | BENZO | 1 | | | |
| E13 | SR218 | 57.2 | 50 | 25 | 40587 |
| | BA | 41.8 | | | |
| | BENZO | 1 | | | |
| E14 | SR218 | 69.6 | 50 | 50 | 39028 |
| | BA | 29.4 | | | |
| | BENZO | 1 | | | |
| C18 | IBOA | 41.5 | 50 | -10 | 40802 |
| | BA | 57.5 | | | |
| | BENZO | 1 | | | |
| E15 | IBOA | 49.2 | 50 | 0 | 40126 |
| | BA | 49.8 | | | |
| | BENZO | 1 | | | |
| E16 | IBOA | 66.3 | 50 | 25 | 36987 |
| | BA | 32.7 | | | |
| | BENZO | 1 | | | |
| E17 | IBOA | 80.8 | 50 | 50 | 34034 |
| | BA | 18.2 | | | |
| | BENZO | 1 | | | |
| C19 | TBMA | 37.1 | 50 | -10 | 32286 |
| | BA | 61.9 | | | |
| | BENZO | 1 | | | |

(continued)

| Example | Backbone (wt%) | | Final MEK (wt%) | Weight Predicted average $T_g$ (°C) molecular weight ($M_w$) | |
|---|---|---|---|---|---|
| E18 | TBMA | 44 | 50 | 0 | 33111 |
| | BA | 55 | | | |
| | BENZO | 1 | | | |
| E19 | TBMA | 59.3 | 50 | 25 | 27634 |
| | BA | 39.7 | | | |
| | BENZO | 1 | | | |
| E20 | TBMA | 72.3 | 50 | 50 | 26580 |
| | BA | 26.7 | | | |
| | BENZO | 1 | | | |
| C20 | SR420 | 59.3 | 50 | -10 | 108348 |
| | BA | 39.1 | | | |
| | BENZO | 1 | | | |
| E21 | SR420 | 70.4 | 50 | 0 | 81585 |
| | BA | 28.6 | | | |
| | BENZO | 1 | | | |
| E22 | SR420 | 94.9 | 50 | 25 | 65590 |
| | BA | 4.1 | | | |
| | BENZO | 1 | | | |
| E23 | SR420 | 99 | 50 | 30 | 92069 |
| | BA | 0 | | | |
| | BENZO | 1 | | | |
| C21 | SR421A | 34.3 | 50 | -10 | 59746 |
| | BA | 64.7 | | | |
| | BENZO | 1 | | | |
| E24 | SR421A | 40.7 | 50 | 0 | 56574 |
| | BA | 58.3 | | | |
| | BENZO | 1 | | | |
| E25 | SR421A | 54.8 | 50 | 25 | 51756 |
| | BA | 44.2 | | | |
| | BENZO | 1 | | | |
| E26 | SR421A | 66.8 | 50 | 50 | 48413 |
| | BA | 32.2 | | | |
| | BENZO | 1 | | | |

Methods

The following methods were used in the application:

Method A - Gel Content

The gel content of examples were measured by curing a 3 MIL wet coating using an H bulb (small Fusion LC6, 15 fpm, three passes). The draw-down thickness depended on the final MEK percentage in the example. For instance, the examples were provided as either 60% monomers and 40% MEK, or 50% monomers and 50% MEK. The examples having 40% MEK were drawn down from 5 MIL thick and the examples having 50% MEK were drawn down from 6 MIL thick such that after evaporation of MEK, the film thickness is 3 MIL. After the draw-down, the glass slides were placed in a 60 °C oven for 1 hour to remove the solvent. The samples were cured in air or nitrogen. The samples were removed from the glass slides after curing and placed in a solution of MEK for 24 hours. Gel content was given as a percentage of the remaining weight of the sample after 24 hours of soaking in MEK as compared to the intial weight of the sample as given by the equation below.

$$Gel\ content\ (\%) = \frac{final\ weight}{initial\ weight} * 100$$

Referring now to FIG. 1, environment (i.e., air (shown in gray bars) or nitrogen (shown in black bars) had minimal effect on gel content. Example E1, an oligomer including 54.5 wt% BA, 44.5 wt% MMA, and 1 wt% BENZO, had a gel content of less than 5 wt% when cured in air and nitrogen. On the other hand, Comparative Example C7, an oligomer including 69.5 wt% BA, 26.5 wt% MMA, and 1 wt% BENZO, had a gel content of 67 wt% (air) and 79% (nitrogen). As exemplified by FIG. 1 and table 1, gel content decreases and $T_g$ increases as MMA, a high $T_g$ monomer unit, increases. Accordingly, the amount of polymerized high $T_g$ monomer units and polymerized low $T_g$ monomer units in the oligomer may be tailored to achieve both a desired crosslinking amount, as indicated gel content and $T_g$.

Referring now to FIGS. 2 and 3, replacement of MMA with an alternate high $T_g$ monomer unit, IBOMA, showed improvement in gel content whether cured in air (FIG. 2) or nitrogen (FIG. 3) when normalized by the predicted $T_g$ of the examples. For instance, Example E2, an oligomer including 38.5 wt% BA, 60.4 wt% MMA, and 1 wt% BENZO, had a predicted $T_g$ of 25 °C, and a gel content of 5 wt% (air and nitrogen). Example E4, an oligomer including 38.5 wt% BA, 50.4 wt% IBOMA, and 1 wt% BENZO, had a predicted $T_g$ of 24 °C, and a gel content of 40 wt% (air) and 51 wt% (nitrogen). As exemplified by FIG. 2, FIG. 3, and table 1, the selection of certain polymerized high $T_g$ monomer units and the amount of polymerized high $T_g$ monomer units and polymerized low $T_g$ monomer units in the oligomer may be tailored to achieve both a desired crosslinking amount, as indicated gel content and higher $T_g$.

Referring now to FIGS. 4 and 5, replacement of MMA with alternative high-$T_g$ monomer units such as SR506A and tBMA, showed improvement in gel content whether cured in air (FIG. 4) or nitrogen (FIG. 5) when normalized by the predicted $T_g$ of the examples. Further, replacing IBOMA with other cycloaliphatic moieties, such as SR421A, and SR218, resulted in a higher gel content at copolomer ration that result in a $T_g$ of 25 °C and 50 °C, respectively. While not wishing to be bound by theory, the incorporation of a cycloaliphatic moiety may allow for neighboring acrylic copolymer chains to initiate hydrogen abstraction faster and more efficiently, due to availability of tertiary protons on the cycloaliphatic ring, unlike a copolymer containing MMA. Furthermore, the size of the cycloaliphatic comonomer and availability of numerous sites for hydrogen abstraction may give neighboring chains more available protons with less steric hindrance compared to a small aliphatic comonomer, such as MMA.

As exemplified by FIGS. 2-5 and table 1, the high-$T_g$ monomer unit used may be tailored to achieve a desired crosslinking amount at given copolymer ratios, as indicated by gel content.

Method B - Photo Differential Scanning Calorimetry (PhotoDSC)

Examples were combined with SR355 in an initial weight ratio of oligomer:SR355 and were placed in a Tzero pan and residual solvent was flashed off in the oven. The initial weight ratio of the oligomer:SR355 was selected to achieve a 1:1 weight ratio of oligomer:SR355 after the solvent was flashed off. The samples were exposed to a broad spectrum UV light (100 mW/$cm^2$) for two minutes.

Referring now to FIG. 6, the time it took to reach peak maximum was recorded (shown by gray bars in FIG. 6) to determine cure speeds of each oligomer. The heat flow under each curve was measured during cure (shown in black bars in FIG. 6). As exemplified by FIG. 6, the cure speed increased as the amount of MMA increased. Accordingly, the amount of polymerized high $T_g$ monomer units and polymerized low $T_g$ monomer units in the oligomer may be tailored to achieve a desired cure speed. Moreover, all examples in FIG. 6 induced crosslinking with SR355.

Referring now to FIG. 7, the time it took to reach peak maximum was recorded to determine cure speeds of each oligomer. As exemplified by FIG. 7, all examples had similar cure speeds. Cure speeds tended to slow down as the $T_g$ of the oligomer increased. Accordingly, the amount of polymerized high $T_g$ monomer units and polymerized low $T_g$ monomer units in the oligomer may be tailored to adjust the oligomer $T_g$ and achieve a desired cure speed.

UV curable coatings compositions were made by adding enough oligomer to ditrimethylolpropane tetraacrylate (SR355) so that the resulting composition had a 1:1 weight ratio of oligomer to SR355 after MEK evaporation. The UV curable coatings compositions were mixed until homogenous at 1500 rpm for 2 minutes using a Flacktek® DAC 400.2 VAC high speed mixer.

The gel content was measured by curing a 4 MIL wet coating of the UV curable coatings compositions on glass slides. After the draw-down, the glass slides were placed in a 60 °C oven for 1 hour to remove the solvent. The samples were cured in air or nitrogen. For air: After drying in the oven, samples were cured using a small Fusion LC6 microwave bulb, 15 feet per minute, three passes. For nitrogen: After drying in the oven, samples were placed in a nitrogen chamber and nitrogen flow was applied for five minutes. The nitrogen chamber with quartz window was passed under the Fusion LC6 microwave bulb, 15 feet per minute, three passes. The samples were removed from the glass slides after curing and placed in a solution of MEK for 24 hours. Gel content was given as a percentage of the remaining weight of the sample after 24 hours of soaking in MEK compared to the initial weight of the sample as given by the equation below.

$$Gel\ content\ (\%) = \frac{final\ weight}{initial\ weight} * 100$$

The gel content of a UV curable coatings composition containing Oligomer E5 with SR355 was 59.1% ±1.4% in air and 57.7% ±0.6% in nitrogen. The gel content of a UV curable coatings composition containing Oligomer E12 with SR355 was 64.1% ±1.2% in air and 60.9% ±5.4% in nitrogen.

Further aspects of the invention are provided by the subject matter of the following clauses:

Clause 1. An oligomer comprising: comprising, based on the total weight of the oligomer: from 1% to 95% by weight polymerized high-$T_g$ monomer units, from 0.1% to 98.9% by weight polymerized low-$T_g$ monomer units, from 0.1% to 40% by weight polymerized chromophore monomer units, and from 0 to 20% by weight at least one polymerized additional monomer unit; wherein: the high-$T_g$ monomer units are (meth)acrylate monomers having a Fox Equation average glass transition temperature ($T_g$) equal to or greater than 25 °C, the low-$T_g$ monomer units are monovalent (meth)acrylate monomers having a Fox Equation average $T_g$ less than 25 °C, the Fox Equation average $T_g$ of the high-$T_g$ monomer units is at least 20 °C greater than the Fox Equation average $T_g$ of the low-$T_g$ monomer units, the chromophore monomer units are (meth)acrylate monomers having a pendent Norrish Type II chromophore, the oligomer has a weight average molecular weight of at least 10,000 grams per mole (g/mol), and the oligomer has a $T_g$ equal to or greater than 0 °C.

Clause 2. The oligomer of any preceding clause, wherein the oligomer is according to formula (I) as disclosed and described herein; and where: $A^1$ is ($C_1$-$C_{30}$)hydrocarbyl or ($C_1$-$C_{30}$)heterohydrocarbyl, $A^2$ is ($C_2$-$C_{30}$)hydrocarbyl or ($C_2$-$C_{30}$)heterohydrocarbyl, $A^3$ is a monovalent residue comprising the Norrish Type II chromophore, $A^4$ is a ($C_1$-$C_{30}$)hydrocarbyl or ($C_1$-$C_{30}$)heterohydrocarbyl, $Z^1$, $Z^2$, $Z^3$, and $Z^4$ are independently -H or $-CH_3$, m is a weight fraction of the polymerized high-$T_g$ monomer units, n is a weight fraction of the polymerized low-$T_g$ monomer units, p is a weight fraction of the polymerized chromophore monomer units, q is a weight fraction of the polymerized additional monomer units and optionally is zero, and m + n + p + q is equal to 1.

Clause 3. The oligomer of any preceding clause, wherein $A^1$ is chosen from methyl, ethyl, isopropyl, isobutyl, tert-butyl, a substituted or unsubstituted ($C_6$-$C_{12}$)cycloalkyl, or combinations thereof, $A^2$ is a linear or branched ($C_2$-$C_{30}$)alkyl or combinations thereof, and $A^3$ is X or -L-X, where L is a ($C_1$-$C_{10}$)heterohydrocarbylene linker and X is a monovalent residue of the Norrish Type II chromophore.

Clause 4. The oligomer of any preceding clause, wherein $A^1$ is chosen from methyl, ethyl, isopropyl, isobutyl, tert-butyl, or a substituted or unsubstituted ($C_6$-$C_{12}$)cycloalkyl, or combinations thereof, $A^2$ is chosen from n-butyl, isobutyl, hexyl, 2-ethylhexyl, isooctyl, isodecyl, tridecyl, lauryl, or combinations thereof, and $A^3$ is a monovalent residue of the Norrish Type II chromophore.

Clause 5. The oligomer of any preceding clause, wherein the Norrish Type II chromophore is chosen from benzophenones, thioxanthones, or titanocenes.

Clause 6. The oligomer of any preceding clause, wherein $A^3$ is a monovalent residue of benzophenone

Clause 7. The oligomer of any preceding clause, $A^1$ is chosen from methyl, tert-butyl, isobornyl, cyclohexyl, or 3,3,5-trimethylcyclohexyl, or combinations thereof, $A^2$ is n-butyl, and $A^3$ is a monovalent residue of benzophenone.

Clause 8. The oligomer of any preceding clause, wherein $A^3$ has formula (II) as disclosed and described herein.

Clause 9. The oligomer of any preceding clause, wherein q is from 0.001 to 0.20, and the additional monomer units are chosen from dimethylaminomethyl (meth)acrylate, dimethylaminoethyl (meth)acrylate, morpholino (meth)acrylate, dimethylamino (meth)acrylate, N-vinylpyrrolidone, N-vinylcaprolactam, acryloxymorpholine, dimethyl acrylamide, poly(ethylenoxide)monoacrylate or combinations thereof

Clause 10. The oligomer of any preceding clause, according to formula (III) as described and disclosed herein, where: m is from 0.2 to 0.8, n is from 0.1 to 0.8, and p is from 0.001 to 0.2; and wherein the oligomer has a weight average molecular weight of at least 20,000 g/mol.

Clause 11. The oligomer of any preceding clause, wherein $Z^1$ is $-CH_3$, $Z^2$, and $Z^3$ are -H, and $Z^4$ is -H, if q is greater than 0.

Clause 12. The oligomer of any preceding clause, wherein the $T_g$ of the oligomer is from 0 °C to 100 °C.

Clause 13. The oligomer of any preceding clause, wherein q is from 0.001 to 0.20, and the additional monomer units are chosen from dimethylaminomethyl (meth)acrylate, dimethylaminoethyl (meth)acrylate, morpholino (meth)acrylate), dimethylamino (methacrylate), or combinations thereof.

Clause 14. The oligomer of any preceding clause, wherein additional monomer units are (meth)acrylate monomers.

Clause 15. The oligomer of any preceding clause, wherein additional monomer units are (meth)acrylate monomers having a pendent amine functionality.

Clause 16. The oligomer of any preceding clause, wherein $A^4$ comprises dimethylaminomethyl, dimethylaminoethyl, morpholino, dimethylamino, or combinations thereof.

Clause 17. The oligomer of any preceding clause, wherein $A^1$ is chosen from methyl, tert-butyl, isobornyl, cyclohexyl, 3,3,5-trimethylcyclohexyl, or combinations thereof, $A^2$ is chosen from n-butyl, isobutyl, hexyl, 2-ethylhexyl, isooctyl, isodecyl, tridecyl, or lauryl, or combinations thereof, and $A^3$ is a monovalent radical of the Norrish Type II chromophore.

Clause 18. The oligomer of any preceding clause, wherein $A^3$ is -L-X, where L is a $(C_1-C_{10})$heterohydrocarbylene linker and X is a monovalent radical of benzophenone.

Clause 19. The oligomer of any preceding clause, wherein: m is from 0.40 to 0.90, n is from 0.10 to 0.60, and p is from 0.005 to 0.03.

Clause 20. The oligomer of any preceding clause, wherein: m is from 0.70 to 0.90, n is from 0.10 to 0.30, and p is from 0.005 to 0.03.

Clause 21. The oligomer of any preceding clause, wherein: m is from 0.40 to 0.60, n is from 0.40 to 0.60, and p is from 0.005 to 0.03.

Clause 22. The oligomer of any preceding clause, wherein the oligomer, upon curing, has a gel content of at least 10%.

Clause 23. The oligomer of any preceding clause, wherein the oligomer, upon curing, has a gel content of at least 20%.

Clause 24. An ultraviolet curable composition comprising the oligomer according to any preceding clause.

Clause 25. The ultraviolet curable composition of any preceding clause, comprising one or more (meth)acrylate monomers, diluents, (meth)acrylate oligomers, fillers, photoinitiators, slip agents, thickeners, slip agents, hindered amine light stabilizers, ultraviolet absorbing monomers, or other auxiliary additives.

Clause 26. The ultraviolet curable composition of any preceding clause, comprising one or more photoinitiators in addition to the polymerized chromophore monomer units of the oligomer.

Clause 27. A coating formed by curing the ultraviolet curable composition of any of the preceding clauses.

Clause 28. The coating of any preceding clause, wherein the coating has a gel content of at least 30%.

Clause 29. The coating of any preceding clause, wherein the coating has a gel content of at least 50%.

Clause 30. The coating of any preceding clause, wherein the coating has a gel content of at least 70%.

It will be apparent to persons of ordinary skill in the art that various modifications and variations can be made without departing from the scope disclosed herein. Since modifications, combinations, sub-combinations, and variations of the disclosed embodiments, which incorporate the spirit and substance disclosed herein, may occur to persons of ordinary skill in the art, the scope disclosed herein should be construed to include everything within the scope of the appended claims and their equivalents.

For the purposes of defining the present technology, the transitional phrase "consisting of' may be introduced in the claims as a closed preamble term limiting the scope of the claims to the recited components or steps and any naturally occurring impurities. For the purposes of defining the present technology, the transitional phrase "consisting essentially of' may be introduced in the claims to limit the scope of one or more claims to the recited elements, components, materials, or method steps as well as any non-recited elements, components, materials, or method steps that do not materially affect the novel characteristics of the claimed subject matter.

As used in the Specification and appended Claims, the singular forms "a", "an", and "the" include plural references unless the context clearly indicates otherwise. The verb "comprises" and its conjugated forms should be interpreted as referring to elements, components or steps in a non-exclusive manner. The referenced elements, components or steps may be present, utilized or combined with other elements, components or steps not expressly referenced.

It should be understood that any two quantitative values assigned to a property may constitute a range of that property, and all combinations of ranges formed from all stated quantitative values of a given property are contemplated in this disclosure. The subject matter disclosed herein has been described in detail and by reference to specific embodiments. It should be understood that any detailed description of a component or feature of an embodiment does not necessarily imply that the component or feature is essential to the particular embodiment or to any other embodiment.

## Claims

**1.** An oligomer comprising, based on the total weight of the oligomer:

from 1% to 95% by weight polymerized high-$T_g$ monomer units;
from 0.1% to 98.9% by weight polymerized low-$T_g$ monomer units;
from 0.1% to 40% by weight polymerized chromophore monomer units; and
from 0 to 20% by weight of at least one polymerized additional monomer unit;

wherein:

the high-$T_g$ monomer units are (meth)acrylate monomers having a Fox Equation average glass transition temperature ($T_g$) equal to or greater than 25 °C;
the low-$T_g$ monomer units are monovalent (meth)acrylate monomers having a Fox Equation average $T_g$ less than 25 °C;
the Fox Equation average $T_g$ of the high-$T_g$ monomer units is at least 20 °C greater than the Fox Equation average $T_g$ of the low-$T_g$ monomer units;
the chromophore monomer units are (meth)acrylate monomers having a pendent Norrish Type II chromophore;
the oligomer has a weight average molecular weight of at least 10,000 grams per mole (g/mol); and
the oligomer has a $T_g$ equal to or greater than 0 °C.

**2.** The oligomer of claim 1, according to formula (I):

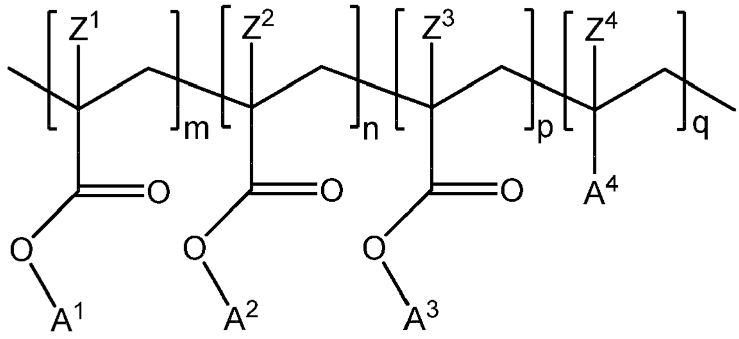

(I)

where:

$A^1$ is $(C_1\text{-}C_{30})$hydrocarbyl or $(C_1\text{-}C_{30})$heterohydrocarbyl;
$A^2$ is $(C_2\text{-}C_{30})$hydrocarbyl or $(C_2\text{-}C_{30})$heterohydrocarbyl;
$A^3$ is a monovalent residue comprising the Norrish Type II chromophore;
$A^4$ is a $(C_1\text{-}C_{30})$hydrocarbyl or $(C_1\text{-}C_{30})$heterohydrocarbyl;
$Z^1$, $Z^2$, $Z^3$, and $Z^4$ are independently -H or $-CH_3$;
m is a weight fraction of the polymerized high-$T_g$ monomer units;
n is a weight fraction of the polymerized low-$T_g$ monomer units;
p is a weight fraction of the polymerized chromophore monomer units; and
q is a weight fraction of the at least one polymerized additional monomer units and optionally is zero; and
m + n + p + q is equal to 1.

**3.** The oligomer of claim 2, wherein:

$A^1$ is chosen from methyl, ethyl, isopropyl, isobutyl, tert-butyl, a substituted or unsubstituted $(C_6\text{-}C_{12})$cycloalkyl, or combinations thereof;
$A^2$ is a linear or branched $(C_2\text{-}C_{30})$alkyl or combinations thereof; and
$A^3$ is X or -L-X, where L is a $(C_1\text{-}C_{10})$heterohydrocarbylene linker and X is a monovalent residue of the Norrish Type II chromophore.

**4.** The oligomer of claim 2, wherein:

$A^1$ is chosen from methyl, ethyl, isopropyl, isobutyl, tert-butyl, or a substituted or unsubstituted $(C_6\text{-}C_{12})$cycloalkyl, or combinations thereof;
$A^2$ is chosen from n-butyl, isobutyl, hexyl, 2-ethylhexyl, isooctyl, isodecyl, tridecyl, lauryl, or combinations thereof; and
$A^3$ is a monovalent residue of the Norrish Type II chromophore.

**5.** The oligomer of any of claims 1 to 4, wherein the Norrish Type II chromophore is chosen from benzophenones, thioxanthones, or titanocenes.

**6.** The oligomer of any of claims 2 to 5, wherein $A^3$ is a monovalent residue of benzophenone.

**7.** The oligomer of any of claims 2 to 6, wherein:

$A^1$ is chosen from methyl, tert-butyl, isobornyl, cyclohexyl, or 3,3,5-trimethylcyclohexyl, or combinations thereof;
$A^2$ is n-butyl; and
$A^3$ is a monovalent residue of benzophenone.

**8.** The oligomer of any of claims 2 to 7, wherein $A^3$ has formula (II):

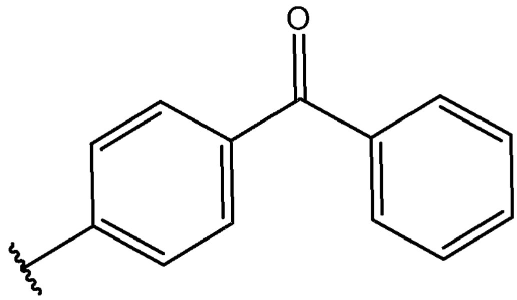

(II).

**9.** The oligomer of any of claims 2 to 8, wherein:

q is from 0.001 to 0.20; and
the additional monomer units are chosen from dimethylaminomethyl (meth)acrylate, dimethylaminoethyl (meth)acrylate, morpholino (meth)acrylate, dimethylamino (meth)acrylate, N-vinylpyrrolidone, N-vinylcaprolactam, acryloxymorpholine, dimethyl acrylamide, poly(ethylenoxide)monoacrylate, or combinations thereof.

**10.** The oligomer of claim 2 to 9, according to formula (V):

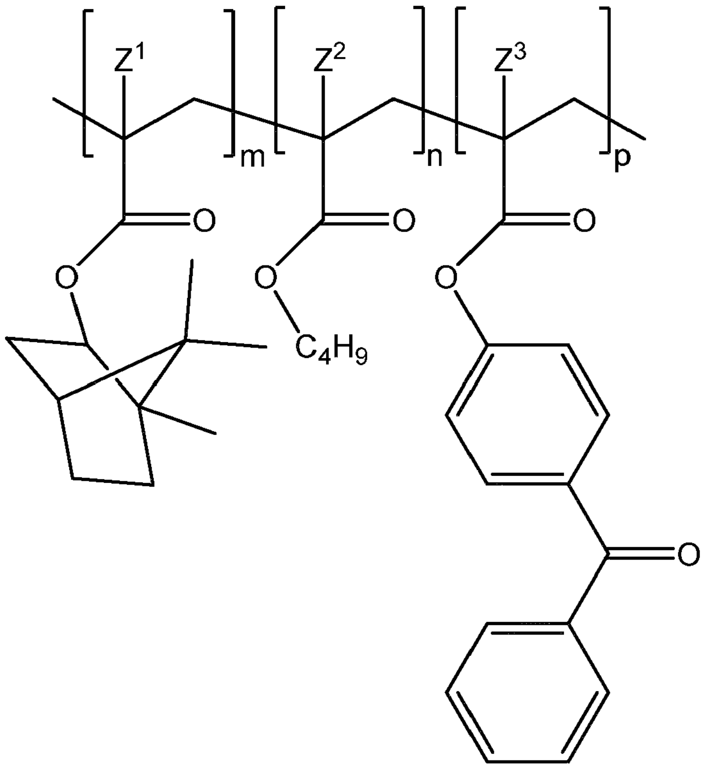

(V)

where:

m is from 0.2 to 0.8;
n is from 0.1 to 0.8; and
p is from 0.001 to 0.2;

wherein:
the oligomer has a weight average molecular weight of at least 20,000 g/mol.

**11.** The oligomer of any of claims 2 to 10, wherein:

$Z^1$ is $-CH_3$;

$Z^2$, and $Z^3$ are -H; and
$Z^4$ is -H, if q is greater than 0.

**12.** The oligomer of any of claims 1 to 11, wherein the $T_g$ of the oligomer is from 0 °C to 100 °C.

**13.** An ultraviolet curable composition comprising the oligomer according to any of claims 1 to 12.

**14.** A coating formed by curing the ultraviolet curable composition of claim 13.

**15.** The coating of claim 14, wherein the coating has a gel content of at least 30%.

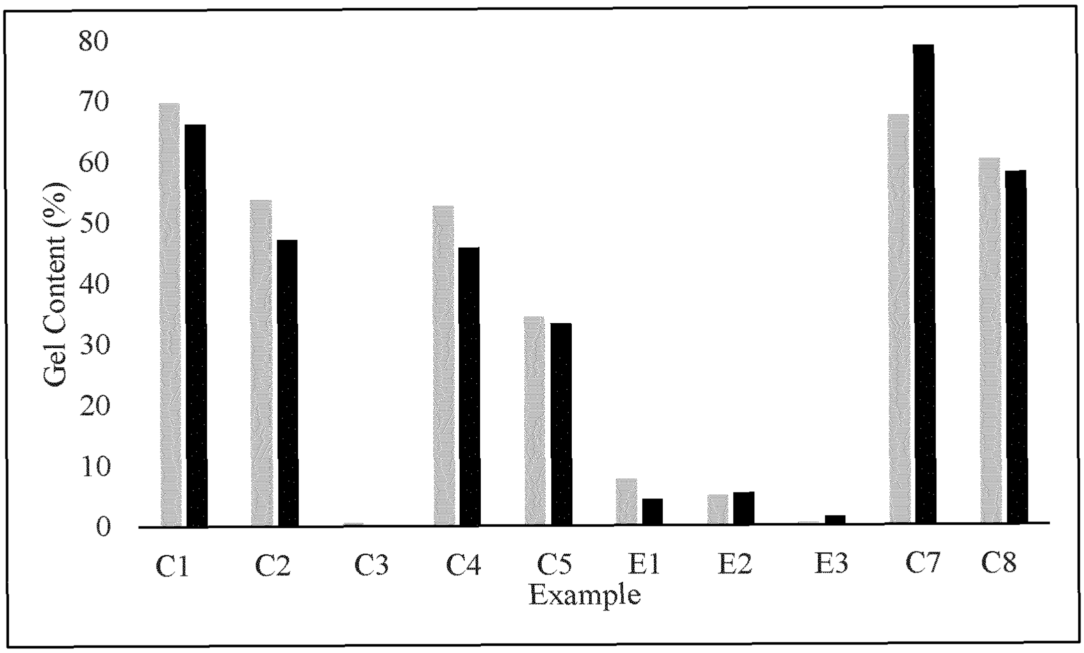
80
70
60
50
40
30
20
10
0
Gel Content (%)
C1
C2
C3
C4
C5
E1
E2
E3
C7
C8
Example

FIG. 1

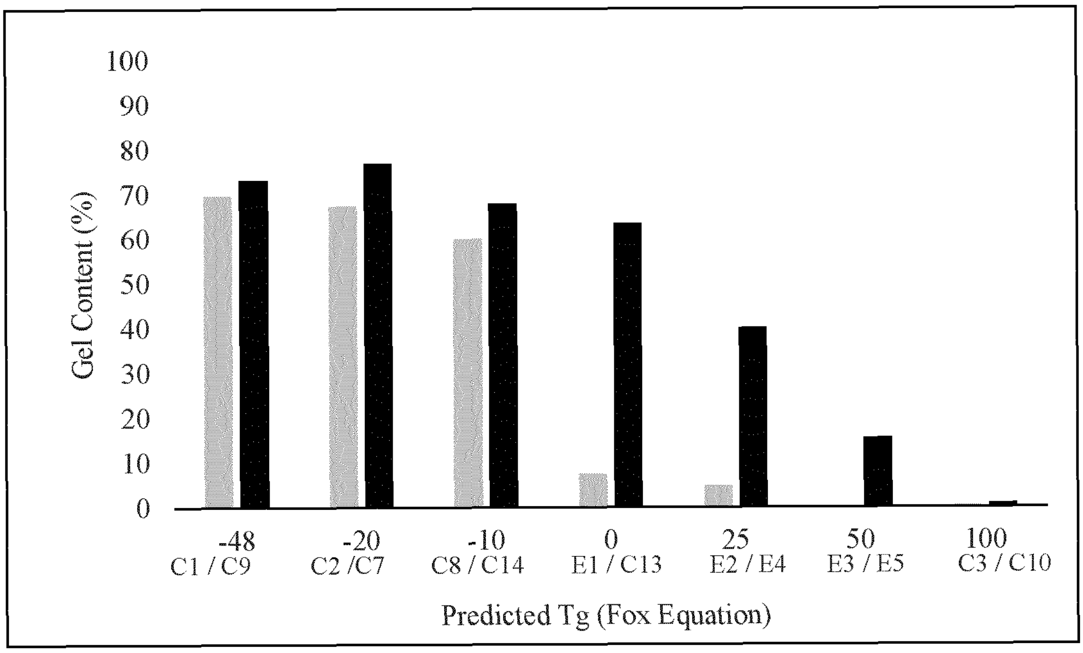
100
90
80
70
60
50
40
30
20
10
0
Gel Content (%)
-48
C1 / C9
-20
C2 /C7
-10
C8 / C14
0
E1 / C13
25
E2 / E4
50
E3 / E5
100
C3 / C10
Predicted Tg (Fox Equation)

FIG. 2

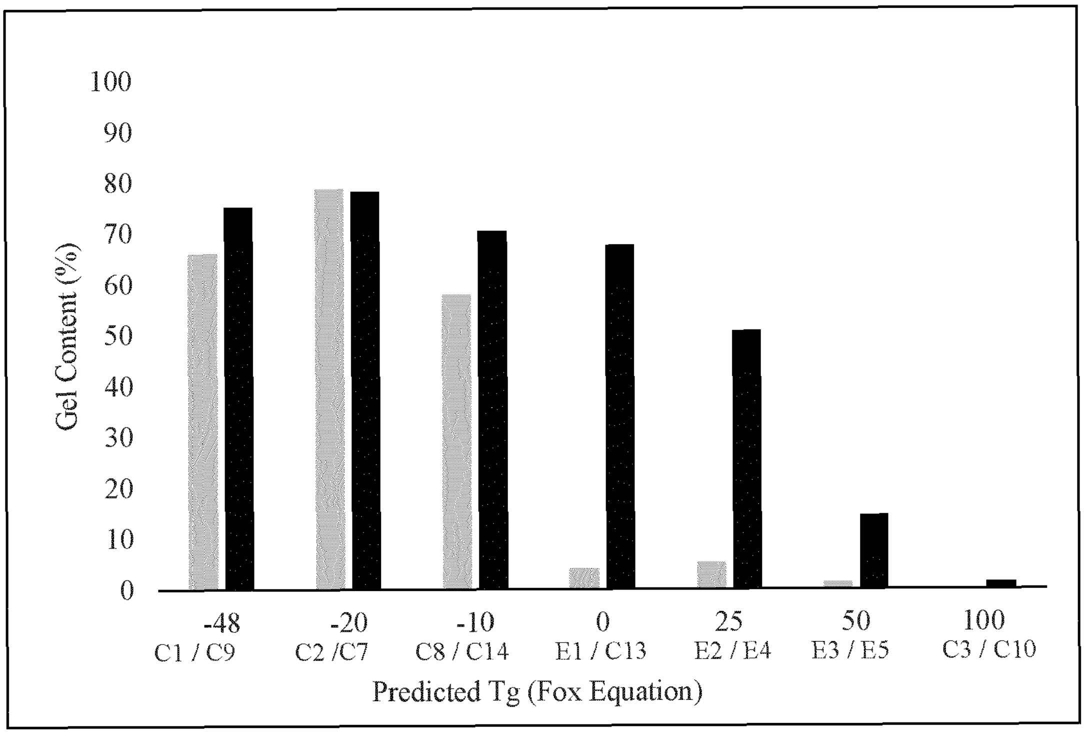
100
90
80
70
60
50
40
30
20
10
0
Gel Content (%)
-48
C1 / C9
-20
C2 /C7
-10
C8 / C14
0
E1 / C13
25
E2 / E4
50
E3 / E5
100
C3 / C10
Predicted Tg (Fox Equation)

FIG. 3

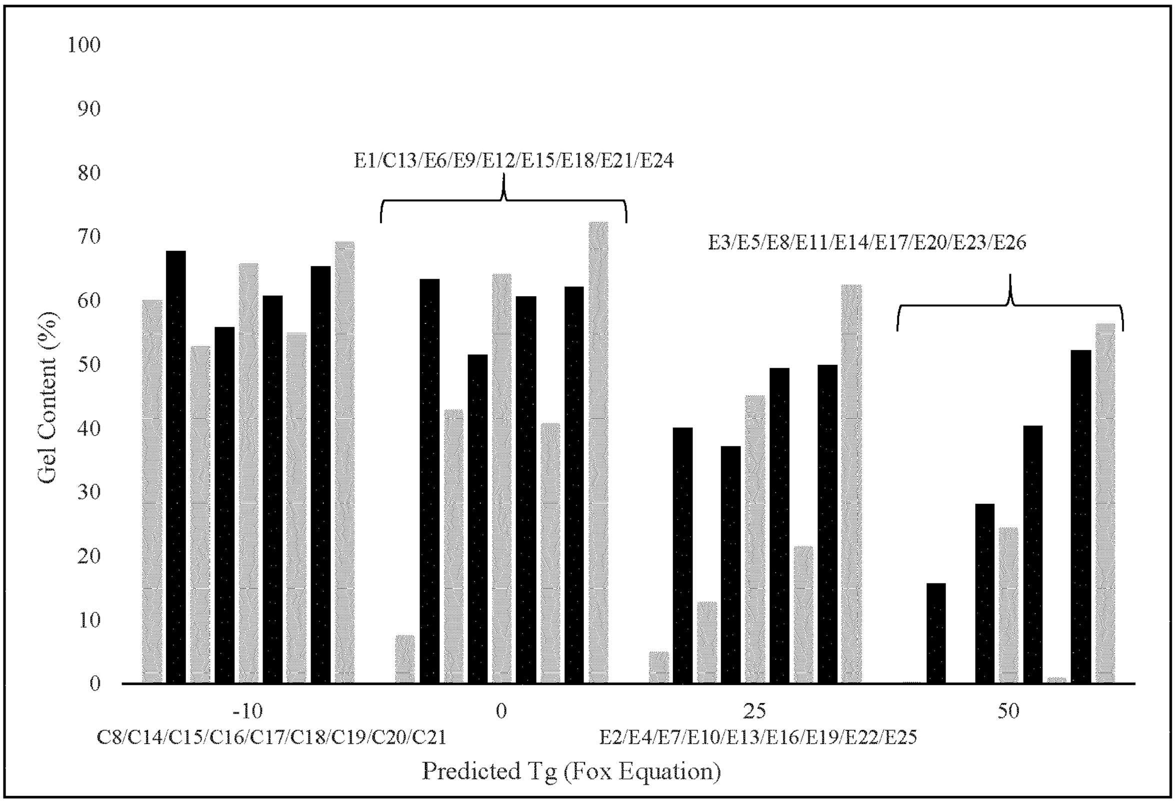
100
90
80
70
60
50
40
30
20
10
0
Gel Content (%)
E1/C13/E6/E9/E12/E15/E18/E21/E24
E3/E5/E8/E11/E14/E17/E20/E23/E26
-10
0
25
50
C8/C14/C15/C16/C17/C18/C19/C20/C21
E2/E4/E7/E10/E13/E16/E19/E22/E25
Predicted Tg (Fox Equation)

FIG. 4

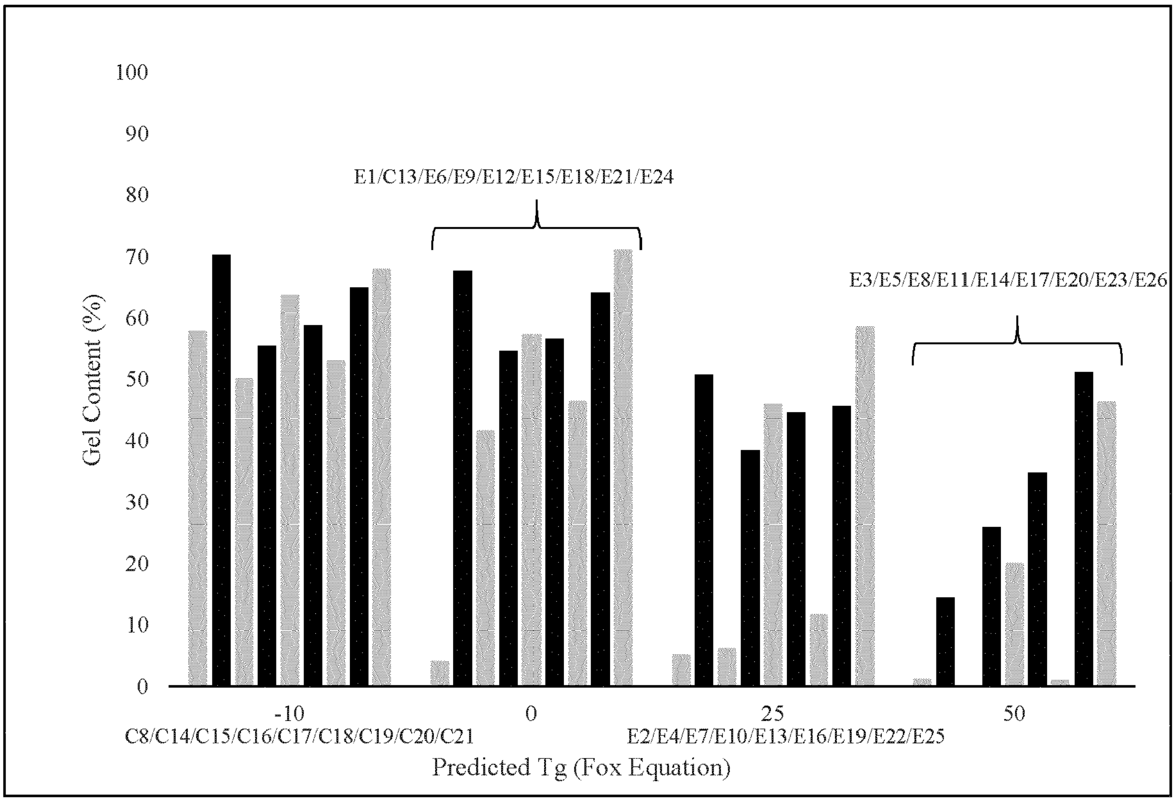
100
90
80
70
60
50
40
30
20
10
0
Gel Content (%)
E1/C13/E6/E9/E12/E15/E18/E21/E24
E3/E5/E8/E11/E14/E17/E20/E23/E26
-10
0
25
50
C8/C14/C15/C16/C17/C18/C19/C20/C21
E2/E4/E7/E10/E13/E16/E19/E22/E25
Predicted Tg (Fox Equation)

FIG. 5

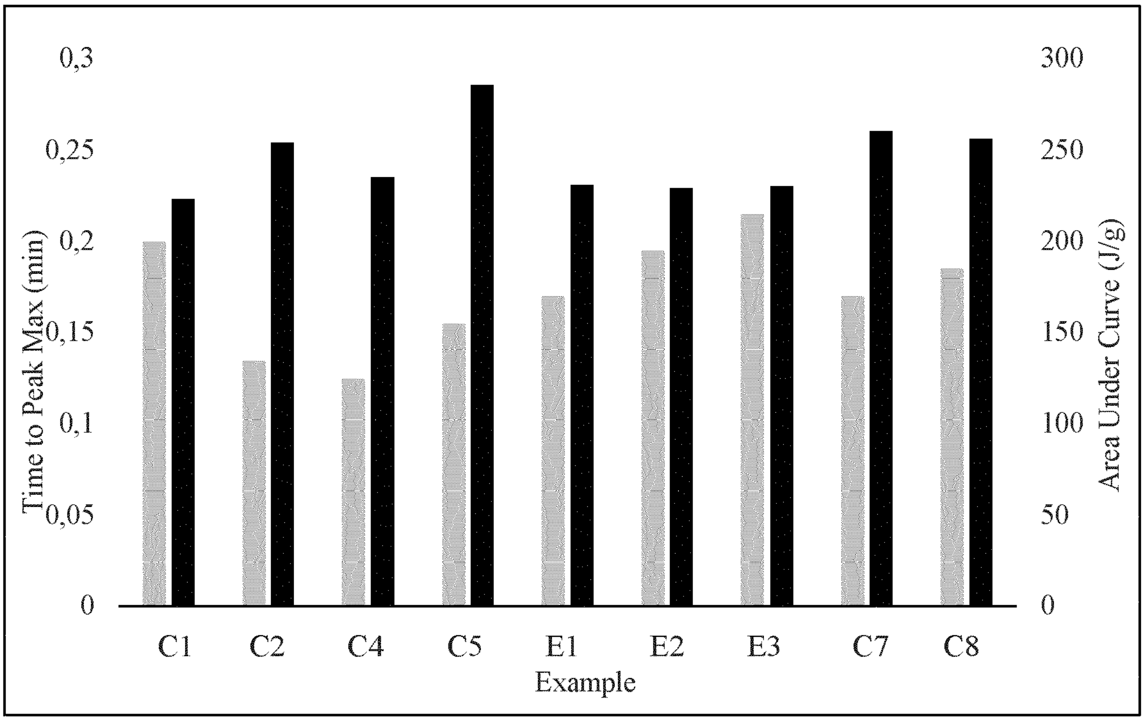
0,3
0,25
0,2
0,15
0,1
0,05
0
Time to Peak Max (min)
300
250
200
150
100
50
0
Area Under Curve (J/g)
C1
C2
C4
C5
E1
E2
E3
C7
C8
Example

FIG. 6

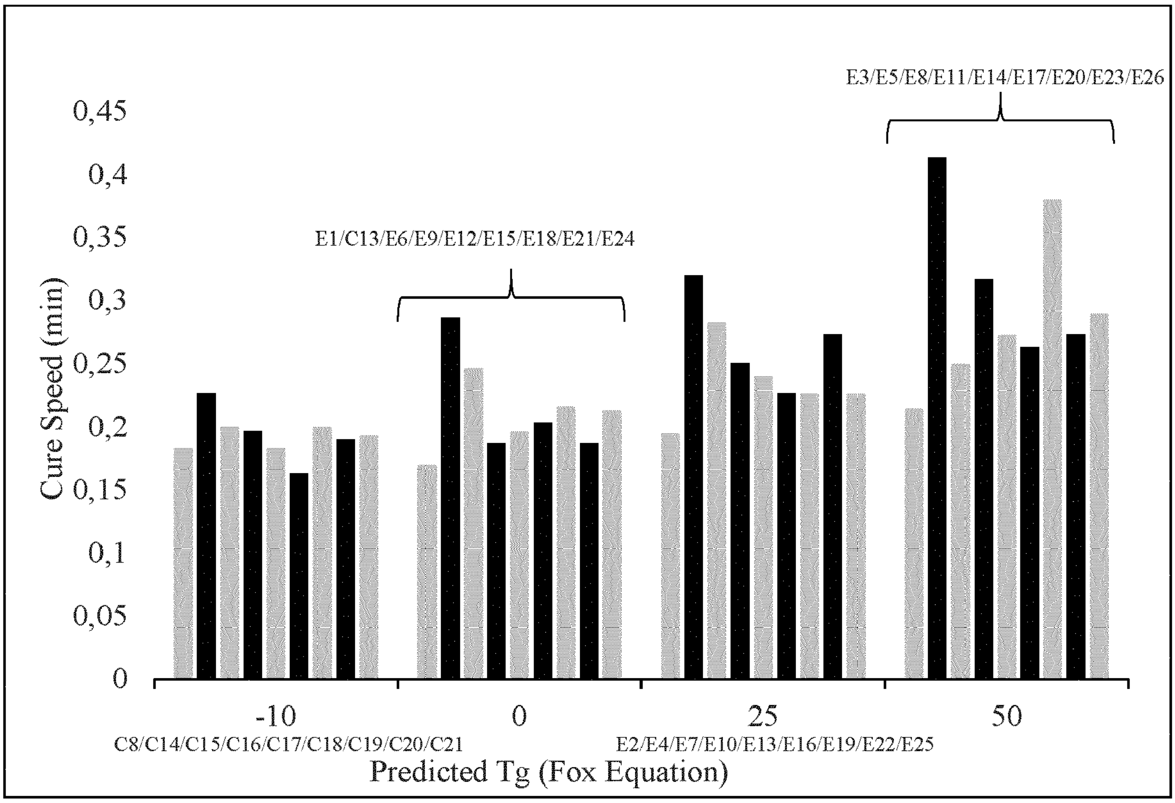

0,45
0,4
0,35
0,3
0,25
0,2
0,15
0,1
0,05
0
Cure Speed (min)
E1/C13/E6/E9/E12/E15/E18/E21/E24
E3/E5/E8/E11/E14/E17/E20/E23/E26
-10
0
25
50
C8/C14/C15/C16/C17/C18/C19/C20/C21
E2/E4/E7/E10/E13/E16/E19/E22/E25
Predicted Tg (Fox Equation)


FIG.7

Europäisches Patentamt
European Patent Office
Office européen des brevets

# EUROPEAN SEARCH REPORT

Application Number
EP 22 30 6078

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/029160 A1 (TAKAMATSU YORINOBU [JP] ET AL) 29 January 2009 (2009-01-29) * paragraph [0038]; examples 1,3,5-12; tables 3,4 * | 1-9, 11-14 | INV. C08F220/14 C08F220/18 C08F265/06 C09D4/06 |
| X | EP 0 699 726 A2 (LOHMANN GMBH & CO KG [DE]) 6 March 1996 (1996-03-06) * page 4, lines 54-58; examples 9, 10; tables 2-4 * | 1,5,6,8, 12-14 | |
| X | CN 102 924 650 A (HEBEI ZHISHENG GREEN TECHNOLOGY CO LTD) 13 February 2013 (2013-02-13) * embodiments 2 and 8 * | 1-8, 11-15 | |
| X | US 2021/079269 A1 (LEE SLE [KR] ET AL) 18 March 2021 (2021-03-18) * preparation examples 1-3, 6; paragraph [0047]; example 1; tables 1,2 * | 1-6,8, 11-14 | |
| A | CN 111 574 867 A (LANZHOU INST CHEMICAL PHYSICS CAS) 25 August 2020 (2020-08-25) * paragraph [0001]; example 3 * | 1-15 | TECHNICAL FIELDS SEARCHED (IPC): C08F C09D |
| A | WO 2020/149385 A1 (SEKISUI FULLER CO LTD [JP]) 23 July 2020 (2020-07-23) * comparative example 5; table 3 * | 1-15 | |

The present search report has been drawn up for all claims

3

| Place of search | Date of completion of the search | Examiner |
|---|---|---|
| The Hague | 19 January 2023 | Dessemond, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 22 30 6078

This annex lists the patent family members relating to the patent documents cited in the above-mentioned European search report. The members are as contained in the European Patent Office EDP file on
The European Patent Office is in no way liable for these particulars which are merely given for the purpose of information.

19-01-2023

| Patent document cited in search report | Publication date | Patent family member(s) | Publication date |
|---|---|---|---|
| US 2009029160 A1 | 29-01-2009 | AT 488361 T | 15-12-2010 |
| | | EP 1853425 A1 | 14-11-2007 |
| | | JP 4817675 B2 | 16-11-2011 |
| | | JP 2006241270 A | 14-09-2006 |
| | | US 2009029160 A1 | 29-01-2009 |
| | | US 2010119962 A1 | 13-05-2010 |
| | | WO 2006094177 A1 | 08-09-2006 |
| EP 0699726 A2 | 06-03-1996 | DE 4431053 A1 | 07-03-1996 |
| | | EP 0699726 A2 | 06-03-1996 |
| CN 102924650 A | 13-02-2013 | NONE | |
| US 2021079269 A1 | 18-03-2021 | CN 111278943 A | 12-06-2020 |
| | | JP 7098726 B2 | 11-07-2022 |
| | | JP 2021501240 A | 14-01-2021 |
| | | KR 20190050632 A | 13-05-2019 |
| | | TW 201923009 A | 16-06-2019 |
| | | US 2021079269 A1 | 18-03-2021 |
| | | WO 2019088752 A1 | 09-05-2019 |
| CN 111574867 A | 25-08-2020 | NONE | |
| WO 2020149385 A1 | 23-07-2020 | JP WO2020149385 A1 | 18-02-2021 |
| | | WO 2020149385 A1 | 23-07-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **A. GILBERT ; J. BAGGOTT.** Essentials of Molecular Photochemistry. Blackwell, 1991